(19)

Europäisches
Patentamt
European
Patent Office
Office européen
des brevets

(11) **EP 2 136 336 B1**

(12) **EUROPEAN PATENT SPECIFICATION**

(45) Date of publication and mention
of the grant of the patent:
**14.12.2011 Bulletin 2011/50**

(51) Int Cl.:
**G06T 11/00** (2006.01) **H04N 7/46** (2006.01)

(21) Application number: **09012336.5**

(22) Date of filing: **07.03.2007**

(54) **Concept for synthesizing texture in a video sequence**

Konzept zur Synthetisierung einer Textur in einer Videosequenz

Concept pour synthétiser une texture dans une séquence vidéo

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**23.12.2009 Bulletin 2009/52**

(62) Document number(s) of the earlier application(s) in
accordance with Art. 76 EPC:
**07711834.7 / 2 118 852**

(73) Proprietor: **Fraunhofer-Gesellschaft zur
Förderung der
angewandten Forschung e.V.
80686 München (DE)**

(72) Inventors:
• **Ndjiki-Nya, Patrick
13505 Berlin (DE)**
• **Wiegand, Thomas
10719 Berlin (DE)**

(74) Representative: **Schenk, Markus et al
Schoppe, Zimmermann, Stöckeler & Zinkler
Patentanwälte
Postfach 246
82043 Pullach bei München (DE)**

(56) References cited:
• **PATRICK NDJIKI-NYA ET AL: "Video coding
using texture analysis and synthesis" 23.
PICTURE CODING SYMPOSIUM;23-4-2003 -
25-4-2003; SAINT MALO,, 23 April 2003
(2003-04-23), XP030080004**
• **PATRICK NDJIKI-NYA ET AL: "A Content-Based
Video Coding Approach for Rigid and Non-Rigid
Textures" IMAGE PROCESSING, 2006 IEEE
INTERNATIONAL CONFERENCE ON, IEEE, PI, 1
October 2006 (2006-10-01), pages 3169-3172,
XP031049350 ISBN: 978-1-4244-0480-3**
• **PATRICK NDJIKI-NYA ET AL: "A New Generic
Texture Synthesis Approach for Enhanced H.
264/MPEG4-AVC Video Coding" VISUAL
CONTENT PROCESSING AND
REPRESENTATION LECTURE NOTES IN
COMPUTER SCIENCE;;LNCS, SPRINGER,
BERLIN, DE, vol. 3893, 1 January 2006
(2006-01-01), pages 121-128, XP019030433 ISBN:
978-3-540-33578-8**

**Description**

The present invention relates to a concept for synthesizing texture in a video sequence. In particular, the present invention is applicable for reducing bit rates in the transmission of video content.

Many video scenes contain typical texture such as water, grass, trees, clouds, sand, etc. These textures are typically rich in detail and therefore expensive to encode. However, exact reconstruction of these textures may be considered unimportant if they are depicted at a low local resolution. It is therefore unnecessary to first perform a computing-intense encoding of such texture areas, to transmit the resulting (large) amount of data, and to finally reconstruct the texture on the basis of MSE (MSE = Mean Squared Error). A viewer only needs to be able to recognize the depicted detail-irrelevant texture, which is often not the case even with the reconstruction thus performed if a pre-filter is employed, since the texture is corrupted thereby. Therefore such detail-irrelevant texture may be synthesized at a video decoder. Texture synthesis in the framework of video coding means that a texture decoder has to reconstruct textures like water, grass, etc. that are usually very costly to encode. The reconstruction of above-mentioned textures at the decoder side basically corresponds to stuffing spatial-temporal holes in a video sequence.

Content-based video coding approaches typically partition a video sequence into coherent regions given spatial, temporal, or spatial-temporal homogeneity constraints. For that, a texture analysis module is required at a video-encoder. Homogeneous segments are typically described using compact attributes like color, texture, or motion features, which are transmitted to the video decoder as side information. The video decoder then calls a synthesis counterpart of the texture analyzer to regenerate aforesaid regions using the side information. Significant bit rate savings can be achieved with this approach, while preserving high visual quality of decoded data.

Texture synthesis approaches can be generally divided into two categories: parametric and non-parametric. In both synthesis categories, the pdf (pdf = probability density function) of given texture examples is approximated and sampled to generate new, perceptually similar texture samples. The example textures are thereby assumed to be large enough to capture the statistics of the underlying "infinite" texture. Parametric synthesis approaches approximate the pdf using a compact model with a fixed parameter set. Non-parametric synthesis approaches do not explicitly model the pdf of the texture examples, they rather directly match the neighborhood properties of the given sample or patch to synthesize with the example texture. One of the selected candidates, with perceptually similar neighborhood properties to the sample or patch to synthesize, is then chosen for synthesis. In general, non-parametric synthesis approaches yield better synthesis results than parametric algorithms. They can also be successfully applied to a much larger variety of textures. In terms of compactness of texture representation, non-parametric synthesis algorithms are typically less efficient than parametric ones. Thus, in the content-based video encoding framework, parametric synthesis methods are usually used.

A large number of publications on texture synthesis algorithms already exist. A patch-based algorithm is presented in A. A. Efros and W. T. Freeman, "Image Quilting for Texture Synthesis and Transfer", Computer Graphics Proc. (SIGGRAPH 01), pages 341-346, Los Angeles, California, USA, August 2001. Efros et al. generate a synthesized output image on a block-by-block basis in raster scan order. New blocks are placed next to old blocks with an overlap of one sixth of the block size. A dynamic programming algorithm is then used to determine which pixels from the new block will show up in the overlap region in the output image. This region of pixels forms a seam between the new block and the rest of the picture. If the block is a good match, the seam will barely be noticeable. Blocks or patches being placed into a texture are all of the same size. A group of possible blocks from the input texture are selected based on how well their overlap regions match the region on the output image that they would overlap. One of these patches is randomly chosen to be the next patch in the texture.

V. Kwatra, A. Schödl, I. Essa, G. Turk, and A. Bobick, "Graphcut Textures: Image and Video Synthesis using Graph Cuts", Computer Graphics Proc. (SIGGRAPH 03), pages 277-286, San Diego, California, USA, July 2003, proposed a graph-cut texture synthesis that also works with patches of example textures. Instead of using a dynamic programming algorithm to determine the best cut between two patches that are overlapping, Kwatra et al. uses a so-called min-cut algorithm to determine the optimal cut between two patches. The overlapping region between two patches is set up as a graph of nodes where each pixel in the overlap region is represented by a node. Nodes along the border next to a patch link back to a single node that represents that patch. This node is either the source or the sink in the min-cut algorithm. Nodes that are adjacent to each other in the graph have arcs between them that are weighted based on the following equation:

$$M(s,t,A,B) \;=\; ||A(s)-B(s)|| \;+\; ||A(t)-B(t)||, \qquad\qquad (1)$$

where A($s$) and B($s$) denote the pixel colors at a position $s$ in the old and new patches, respectively. $M$ is the matching quality costs between the two adjacent pixels $s$ and $t$ and $||\cdot||$ denotes an appropriate norm.

Known publications related to patch-based texture synthesis refer to the synthesis of complete images or complete video sequences and are hence not applicable to synthesize only portions of images or portions of consecutive frames of a video sequence, where the portions correspond to rigid or non-rigid textures to be synthesized.

It is therefore the object of the present invention to provide a concept for an improved synthesis of portions of a video sequence or portions of a picture.

This object is achieved by an apparatus and a method for synthesizing texture in a video sequence according to claims 1 and 3, respectively.

In accordance with a further aspect, the present invention provides a computer program, according to claim 5, for carrying out the inventive method.

In the following, preferred embodiments of the present invention, which is defined by the appended claims, will be described with respect to the accompanying drawings, in which

Fig. 1        shows a schematic example of a flow network;

Fig. 2        shows an overview of a conventional patch-based texture synthesis algorithm;

Fig. 3        shows a schematic assembly of two texture patches with a seam determined by a graph-cut algorithm;

Fig. 4        shows a graph-cut principle given a texture synthesis scenario;

Fig. 5        shows a diagram explaining the accounting for old seams in a current minimum-cut determination;

Fig. 6        shows different locations in a texture sample that can be used for texture synthesis;

Fig. 7        shows a schematic video sequence comprising a sequence of frames, wherein portions of consecutive frames of the video sequence form a spatio-temporal volume to be synthesized;

Fig. 8        shows a schematic video sequence to explain the seamless extension of a temporally stationary video sequence;

Fig. 9        shows a principle flow chart of a texture synthesis in a video sequence;

Fig. 10       shows a block diagram of an apparatus for synthesizing texture in a video sequence;

Fig. 11       shows a structure of a group of frames;

Fig. 12       shows the principle of constrained texture synthesis;

Fig. 13       shows a progressive fade-in of a non-rigid, synthetic texture with original and synthetic samples;

Fig. 14       shows a bit mask used for monitoring texture sample states;

Fig. 15       shows a bit mask for monitoring output texture states;

Fig. 16       shows a spatio-temporal scan line filling procedure;

Fig. 17       shows a spatio-temporal helical filling procedure;

Fig. 18       shows an example for a graph-cut texture synthesis with a metrical cost function;

Fig. 19       shows an example for a graph-cut texture synthesis with a non-metrical cost function;

Fig. 20       shows the implication of a temporal alignment operation;

Fig. 21       shows the principle of temporal alignment of a picture burst;

Fig. 22       shows a flow diagram of a texture synthesis according to a further embodiment of the present invention;

Figs. 23a-f    show schematic drawings of the video sequence to be synthesized in consecutive stages during the texture synthesis of Fig. 22;

Fig. 24    shows key frames of test sequences;

Fig. 25    shows box plots of opinion scores obtained using the inventive method for non-rigid texture synthesis without temporal alignment; and

Fig. 26    shows box plots of opinion scores obtained using the inventive method for non-rigid texture synthesis with and without camera motion compensation.

The texture synthesis framework developed in V. Kwatra, A. Schödl, I. Essa, G. Turk, and A. Bobick, "Graphcut Textures: Image and Video Synthesis using Graph Cuts", Computer Graphics Proc. (SIGGRAPH 03), pages 277-286, San Diego, California, USA, July 2003 is summarized in the following paragraphs as it represents a non-parametric approach with the ability to synthesize a broad range of texture varieties. In fact, plain (2D), i.e. spatial as well as volumetric (3D), i.e. spatio-temporal textures (for example fire, smoke, water, etc.) can be successfully rendered with this approach. For a better understanding of the presented patch-based texture synthesis framework some fundamentals will be introduced first.

The approach by Kwatra et al. is based on Markov random fields (MRF = Markov Random Fields). That is, an infinite texture sample T is defined as a homogeneous random field with the aim to generate a synthetic texture from it. The Markovianity of the random field thereby relates to

$$P(\mathbf{t_i} \mid T-\{i\}) \;=\; P(\mathbf{t_i} \mid N_i)\,, \qquad\qquad (1)$$

that is to the assumption that any texture pattern $\mathbf{t_i}$ extracted from the given texture sample $T$ at location $i$ can be predicted from a corresponding neighborhood system $N_i$ and is independent of the rest of the texture.

The homogeneity property presumes that the conditional probability $P(t_i|N_i)$ is independent of the site $i$ in $T$. MRF allow modeling of non-linear statistical dependencies between amplitude values, e.g. luminance, in a given neighborhood system.

A formal definition of MRF-based texture synthesis can now be given as follows. Let $S$ be an image or video to be synthesized, let $t_i$ be an unknown sub-area or sub-volume of $S$, and let $i_N \subset S$ be an amplitude pattern in the given neighborhood system $N$ of $t_i$. The implementation of MRF then requires an estimation of the conditional probability $\mathbf{P}(t_i|i_N)$. This is a formidable task as the number of $i_N$ constellations is considerable. For instance, let the number of amplitude levels be 256 and let $t_i$ represent a single pixel. Further assuming a neighborhood of four pixels yields a total of $256^4$ possible constellations of $i_N$. Typically, in the texture synthesis framework, texture examples feature only a subset of the possible $i_N$ constellations. Hence, some of the latter are never considered in the course of the synthesis process.

In the non-parametric texture synthesis framework the given texture sample is assumed to capture the statistics of the underlying infinite texture, which is an ill-posed problem as already discussed above. In this framework, the conditional probability distribution function $\mathbf{P}(t_i|i_N)$ is approximated and then sampled. For that, a perceptual similarity measure s is needed. Assuming an infinite texture sample T, the set

$$M = \left\{ t_i' \subset T \,\middle|\, s\!\left[i_N, i_{N'}\right] = 0 \right\} \qquad\qquad (2)$$

refers to the sub-textures $t_i'$ of $T$ with a perceptually similar neighborhood to the unknown sample $t_i$. They can be seen as samples of the conditional pdf of $t_i$. The selection of the most adequate pdf-sample is subject to constraints with regard to the given application. Typically, the sampling of the pdf is done with regard to s (A. A. Efros and T. K. Leung, "Texture Synthesis by Non-parametric Sampling", ICCV 99). In practice, a finite texture sample $T'$ is usually given. Hence, $M$ must be approximated by $M'$, which implies that no matches may be found in $T'$ given a specific neighborhood system $N$ (A. A. Efros and T. K. Leung, "Texture Synthesis by Non-parametric Sampling", ICCV 99). The definition of the perceptual metric s steers the quality of the synthesis results.

As explained above, MRF approaches describe visual patterns by imposing statistical constraints and learn models directly from the signal. Hence, they are also called synthesis by example approaches.

Network flow algorithms have been studied in the field of combinatorial optimization, e.g. in R.K. Ahuja, T.L. Magnanti and J.B. Orlin, "Network Flows: Theory, Algorithms, and Applications", Prentice Hall, New Jersey, 1993. They have been initially used to solve problems in physical networks. Network flow approaches have yet been abstracted and extended to problems with no physical network. In fact do a number of computer vision tasks consist in a constrained label assignment to image samples that can be conveyed into an energy minimization framework. The latter can in turn be represented as a network flow problem. Hence did network flow algorithms find widespread application in optimization problems that can be represented by graphs containing nodes and arcs between these nodes, e.g. in Boykov, Y., Veksler, O., Zabih, R., "Fast approximate energy minimization via graph cuts", IEEE Trans. Pattern Anal. and Machine Intell. 23 (2001), pp. 1222-1239 and Sinha, S., "Graph Cut Algorithms in Vision, Graphics and Machine Learning - An Integrative Paper", UNC Chapel Hill, November 2004.

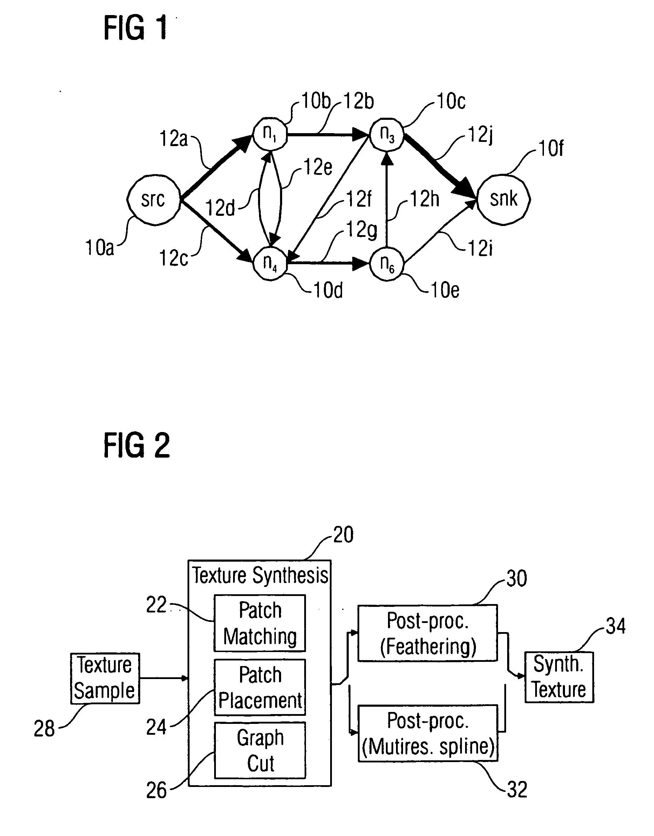

Fig. 1 shows a schematic example of a flow network $G(Nd, E)$ which is composed of nodes $Nd$ 10a-f and edges E 12a-j with corresponding weights, which are related to the depicted weights of the edges 12a-j.

These weights can also be seen as edge capacities. The nodes 10b-e typically correspond to single pixels or a set of pixels in the computer vision context. Two of the vertices (nodes) 10a,f with special attributes are called the source $src \in Nd$ and the $snk \in Nd$. $src$ and $snk$ are usually seen as the class labels that can be assigned to the nodes in vision. Such a flow network depicted in Fig. 1 builds the foundation of the graph cut problem.

The source node 10a features only outgoing edges 12a,c, while the sink node 10f possesses only incoming ones 12i,j. The network thus features a flow from $src$ 10a to $snk$ 10f. In case of a fully connected graph, the two edges between two normal vertices are directed and can feature deviating capacities, which is required in some graph-based applications. Here, however, symmetric weights are assumed. Fig. 1 depicts a flow network or graph $G(Nd, E)$, where the (asymmetric) capacities of the edges E 12a-j are given by their respective strengths. Note that the source 10a and the sink 10f are also called terminal nodes in the literature and that a graph $G(Nd,E)$ can contain more than two terminal nodes.

The minimum cut problem consists in partitioning the graph $G(Nd, E)$ into two disjoint subsets $T_{src} \subset Nd$ and $T_{snk} \subset Nd$, with $T_{src} \cap T_{snk} = \varnothing$, $src \in T_{src}$, and $snk \in T_{snk}$, such that the sum of the capacities of the cut edges is minimized.

That is, if $Ct$ denotes the set of the cut edges, then the following expression must be minimized

$$E_C = \sum_{i=1}^{|Ct|} K(C_i), C_i \in Ct .\qquad(3)$$

According to the theorem by Ford and Fulkerson (L.R. Ford, Jr. and D.R. Fulkerson, "Flows in Networks", Princeton University Press, Princeton, NJ, 1962), solving the min-cut problem is equivalent to solving the max-flow determination task. Hence, the set of min-cut edges, Ct, is determined by finding the maximum flow through the network $G(Nd,E)$. For better illustration, the graph $G(Nd,E)$ can be seen as a set of nodes linked by directed pipelines with capacities corresponding to the edge weights. Now, pumping as much water as possible into the source and observing the amount of water reaching the sink yields the maximum flow of the network. Some pipelines will be saturated in this experiment, i.e. they convey as much water as possible given the pipeline's capacity. Hence, the network's nodes will be divided into two disjoint subsets. The flow $fl$ through an edge can be formalized as a function that gives the number of units the edge can convey.

$$fl : Nd \times Nd \rightarrow IR \qquad(4)$$

where IR denotes the set of real values. The network flow is now constrained by three properties, i.e. the positivity constraint

$$\forall (k,i) \in Nd \times Nd, \ fl(k,i) \geq 0 \qquad(5)$$

and the capacity constraint

$$\forall (k,i) \in Nd \times Nd, \ fl(k,i) \leq K(k,i) \qquad(6)$$

stating that the flow $fl(k,i)$ through the pipeline from node $k$ to node $i$ cannot exceed its capacity $K(k,i)$. The third requirement, the flow conservation constraint, relates to Kirschhoff's law. It states that the total flow into a node is identical to the total flow leaving the node and vice versa. That is, a node cannot store the incoming flow. The flow conservation constraint applies to all vertices of the graph except *src* to *snk*. The total flow towards node *i* can be given as

$$In_i = \sum_{k=1}^{|Nd|} fl(k,i). \qquad (7)$$

The total flow-leaving node *i* can be given as

$$Out_i = \sum_{l=1}^{|Nd|} fl(i,l). \qquad (8)$$

The flow conservation constraint can now be formulated as

$$\forall i \in Nd - \{src, snk\}, = \sum_{k=1}^{|Nd|} fl(k,i) = \sum_{l=1}^{|Nd|} fl(i,l), \qquad (9)$$

where |*Nd*| represents the total amount of nodes in *G(Nd,E)*. Given the above-mentioned constraints, the max-flow through a cut can be given as

$$fl(src, \; snk) = \sum_{x \in T_{src}}^{|Ct|} \sum_{y \in Tsnk}^{|Ct|} fl(x,y) \qquad (10)$$

Based on the properties of the network flow presented above, approaches for the max-flow and min-cut determination can be developed.

Single-source, single sink min-cut or max-flow algorithms can typically be subdivided into two main classes. Some approaches are based on the Ford-Fulkerson method. Other approaches are based on the "push-relabel" technique. A thorough discussion of these approaches is beyond the scope of this disclosure. The reader is referred to L.R. Ford, Jr. and D.R. Fulkerson, "Flows in Networks", Princeton University Press, Princeton, NJ, 1962, Kolmogorov, V., "Graph Based Algorithms for Scene Reconstruction from Two or More Views", PhD Thesis, Cornell University, USA, 2004, Sinha, S., "Graph Cut Algorithms in Vision, Graphics and Machine Learning - An Integrative Paper", UNC Chapel Hill, November 2004 for more details. Notice that the algorithm proposed by Kolmogorov can be used as recommended in Boykov, Y., Veksler, O., Zabih, R., "Fast approximate energy minimization via graph cuts", IEEE Trans. Pattern Anal. and Machine Intell. 23 (2001), pp. 1222-1239.

Graph cuts are an elegant approach to solve several computer vision problems. Given an adequate graph configuration and defined edge capacities, image restoration, image segmentation or disparity estimation problems can be tackled. The first application of graph cuts to the texture synthesis framework was, however, recently proposed by Kwatra et al..

The synthesis algorithm developed by Kwatra et al. can a priori be applied to plane, i.e. spatial and volumetric, i.e. spatio-temporal textures. It is non-parametric and can thus render a large variety of video textures as already argued above. An overview of their approach is given in Fig. 2.

Fig. 2 shows a texture synthesis block 20 comprising a texture patch matching block 22, a texture patch placement block 24 and a graph-cut block 26. A texture sample 28 is input to the texture synthesis block 20, which at its output delivers a synthesized texture for which optional post processing can be applied by the post processing blocks 30 and 32.

The synthetic texture is updated patch-wise by matching (patch matching block 22) its defined neighborhoods with the given texture sample 28 and by placing (patch placement block 24) identified continuation patches in an overlapping manner.

The originality of Kwatra et al.'s approach resides in the fact that they formulate the texture synthesis problem as a graph cut issue. Hence, the optimal seam between two overlapping texture patches, i.e. the seam yielding the best possible MRF likelihood among all possible seams for the given overlap, can be computed, which minimizes subjectively annoying edges at patch transitions. Post-processing tools 30, 32 are provided in case of remaining, subjectively annoying edges.

The approach presented by Kwatra et al. is patch-based, as already explained above. Given a reference texture sample $T$ and an empty lattice $S$ to fill in, Kwatra et al. define three sampling approaches. They all have in common that only unused offsets in the reference texture sample T' are considered to determine continuation patches for the output texture to be synthesized. This is done to avoid noticeable periodicity in the synthetic texture.

The first procedure is called "random placement". The entire reference texture sample $T$ is placed in $S$ at random offsets and in an overlapping manner. This approach is very fast and can be used for stochastic textures, i.e. textures with no dominant oriented structures. The blending procedure in the overlap region will be explained in the next section.

The second procedure is "entire patch matching". It follows the same idea as the random placement method. The difference between both approaches lies in the fact that, here, the offsets in the reference texture sample are obtained through matching. That is, the output texture to be synthesized is initialized with the texture sample at a random offset. The subsequent offsets of the sample are determined under consideration of the cost function

$$E_{EP} = \frac{1}{|\mathbf{v}|} \sum_{p \in \mathbf{v}} |T'(p) - S(p + t)|^2, \qquad (11)$$

where $\mathbf{v}$ corresponds to the portion of translated input (translation $t$) overlapping the output and $p$ is a pixel location in $\mathbf{v}$. This cost function basically corresponds to the normalized sum of squared errors, where the normalization factor is the size, $|\mathbf{v}|$, of the overlap region. The current offset is selected with regard to the following stochastic criterion

$$P \sim e^{-\frac{E}{k\sigma^2}}, \qquad (12)$$

where $\sigma$ corresponds to the standard deviation of the texture sample's amplitudes. $k$ represents a degree of freedom that steers the randomness of the offset selection. The lower the choice of $k$, the more does the offset selection correspond to minimizing equation 11. The higher k, the more the minimization constraint is relaxed. The entire patch matching method can be used for structured or semi-structured textures as their inherent periodicity is captured by the cost function above.

The third procedure is the "sub-patch matching" approach. It is comparable to the entire patch matching method. Here, reference patches of a predefined size, typically much smaller than the reference texture sample $T$, are disposed in $S$. The first sub-patch can thereby be selected at random.

$$E_{SP} = \frac{1}{i_o} \sum_{p \in I_o} |T'(p - t) - S(p)|^2 \qquad (13)$$

The costs for a given translation t of the output texture's sub-patch $i_o$ (overlap region) in $T$ are given in equation 13. The offset selection is operated as given in equation 12.

The sub-patch matching approach is the most effective of the three sampling methods. It can be applied to stochastic and volumetric textures. It captures the local coherency of spatially unstructured textures like water, smoke, etc. The size of the reference sub-patch, copied from the reference texture sample towards $S$, is chosen in a way that it is slightly larger than the overlap region $i_o$ in the output texture to be synthesized. This is done to ensure that the output texture to be synthesized is grown with each update patch. Note that the summed term in equation 11 and equation 13 can be implemented by subtracting the pixel colors. No color space is, however, recommended by Kwatra et al..

The matching approachs presented above can be computationally very expensive, especially when 3D spatio-temporal textures like fire, water or smoke are synthesized. Hence, Kwatra et al. use an FFT-based acceleration algorithm that can be applied to a sum of squared error cost functions. Details with regard to this run-time optimization can be found in V. Kwatra, A. Schödl, I. Essa, G. Turk, and A. Bobick, "Graphcut Textures: Image and Video Synthesis using Graph Cuts", Computer Graphics Proc. (SIGGRAPH 03), pages 277-286, San Diego, California, USA, July 2003.

As already explained above, the synthesized texture S is grown patch-wise, where the current update reference patch is placed in an overlapping manner in the output texture. Kwatra et al. propose a graph cut formulation of the problem of finding an adequate seam between overlapping patches. Once the overlap region (synthetic texture) and the continuation patch (reference texture sample) have been found, the graph cut algorithm determines the path from one end to the other of the overlap region that minimizes the subjective annoyance of the blending.

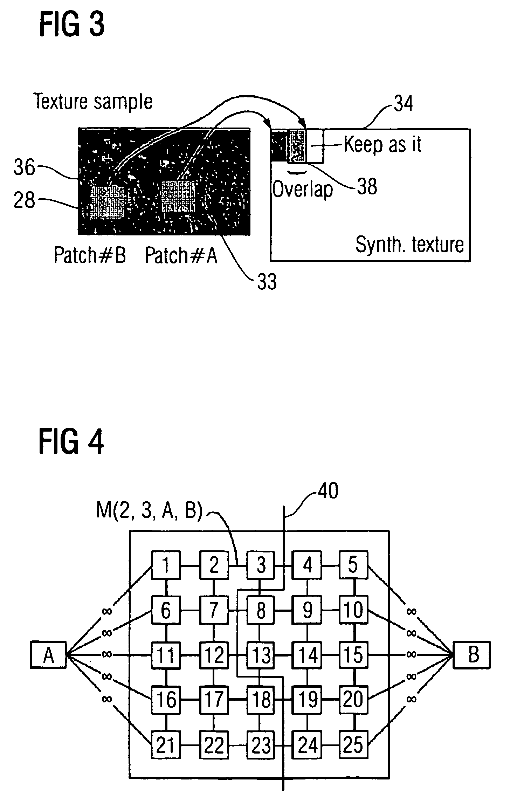

Fig. 3 depicts this problem based on a 2D (spatial) texture synthesis example. A first reference patch #A 33 which has been copied from a reference texture 28 to a texture area 34 to be synthesized is to be overlapped by a second reference patch #B 36 in texture area 34 to be synthesized. A path in an overlap-region 38 defines which irregular shaped portion of the second reference patch or continuation patch 36 (patch B), found in the texture sample 28, must be transferred to the synthetic texture 34. Due to the irregular shape of the copied region, blocking effects can be avoided and seamless transitions generated given "good" continuation patches. The subjective annoyance of the blending is captured by an adequate cost function that is applied to any pixel transition in the overlap region. The cost function used by Kwatra et al. is defined as

$$M(s,p,A,B) = \frac{N_M(s,p,A,B)}{D_M(s,p,A,B)} = \frac{\|\mathbf{a}(s) - \mathbf{b}(s)\| + \|\mathbf{a}(p) - \mathbf{b}(p)\|}{\|g_a^d(s)\| + \|g_a^d(p)\| + \|g_b^d(s)\| + \|g_b^d(p)\|},$$ (14)

where $a$ corresponds to the overlap region in reference patch #A, while $b$ is the overlap region in reference patch #B. $s$ and $p$ are two adjacent pixels in the overlap region, while represents the gradient at location $s$ or $p$ in direction d. $\|\cdot\|$ constitutes any adequate norm. The cost function $M(s,p,A,B)$ constrains the optimal path determined by the graph-cut algorithm. Hence, its formulation is crucial with regard to the quality of the synthesis results.

The graph cut formulation of the texture synthesis problem is depicted in Fig. 4. A 5x5 grid is shown, where each of the numbered square boxes or nodes corresponds to a pixel in the overlap area. Node A may be seen as the overlap region in the output texture to be synthesized, while node B would represent the corresponding portion of the continuation patch found in the reference texture. The graph cut algorithm links adjacent pixel pairs via the cost function defined in equation 14.

Let node A be the source and node B the sink. Some pixels are then linked to source A and sink B with an infinite weight. Hence, a cut at these transitions is made impossible as it would yield infinite costs. This is done in order to constrain samples adjacent to sink and source to come from B and A, respectively, which reflects the fact that false boundaries at transitions between overlap region and sink (or source) should be avoided. The optimal cut, i.e. the cut yielding minimum costs, is determined by applying the optimization algorithms mentioned before. The former is marked in Fig. 4 with reference 40. The cut 40 specifies the contribution of each patch (#A, #B) to the overlap region. For instance, in Fig. 4, the pixels at the left hand side of the cut 40 are provided by patch #A, while the pixels at the right hand side are provided by patch #B.

In A. A. Efros and W. T. Freeman, "Image Quilting for Texture Synthesis and Transfer", Computer Graphics Proc. (SIGGRAPH 01), pages 341-346, Los Angeles, California, USA, August 2001 a texture synthesis algorithm based on image quilting was proposed. Their approach is patch-based and the synthetic texture is also grown with overlapping patches. They propose a similar blending approach called minimum error boundary cut, which is based on dynamic programming. Kwatra et al. argue that the graph-cut formulation of the problem is more generic as old seams can be taken into account, which can not be done using dynamic programming.

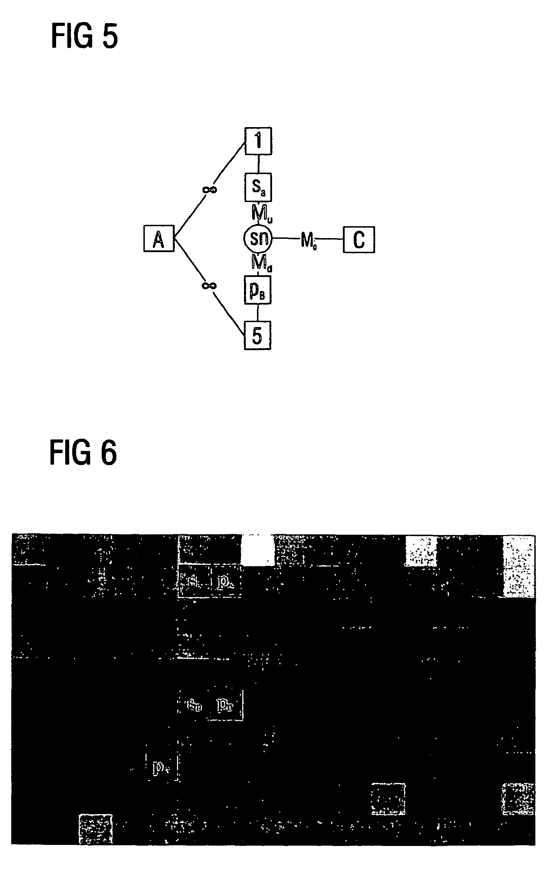

The originality of Kwatra et al.'s approach can be seen in its ability to incorporate seams generated by previous cut operations into the current minimum cut determination problem. A new seam, at possibly reduced costs, can then be determined. This problem is relevant in the sense that it arises a number of times during the synthesis process. The challenge now resides in the proper integration of old seam costs into a graph. In fact, it must be ensured that the old seams are either improved or at least remain unchanged. Therefore do Kwatra et al. insert so-called seam nodes at old seam locations. A one-dimensional illustration of this problem is given in Fig. 5.

Let A and C be overlapping patches. Assume that there exists an old seam between node (pixel) $s_A$ and node $p_B$, where $s_A$ was formerly taken from patch #A and $p_B$ came from patch #B in a previous graph cut operation. Let A represent the pixels already available in the output texture, while C represents the continuation patch, found in the reference texture sample, that is to copy to the output texture to be synthesized (cp. Fig. 6).

A seam node (sn) is inserted between nodes $s_A$ and $p_B$. It is linked to the neighboring nodes with the costs $M_u$ and $M_d$ respectively. $M_u$ and $M_d$ thereby correspond to $M(s_A,p_C,A,C)$ and $M(s_C,p_B,B,C)$ respectively. sn is also linked to C with the cost $Mo$ that corresponds to $M(s_A, p_B, A, B)$, which in turn is the old seam cost. In Fig. 5, it can be seen that, if the edge between patch C and the seam node is cut, the latter remains in the synthetic texture. On the other hand, if the edge between node $s_A$ and the seam node is cut, $p_B$ remains linked to C and must be updated with $p_C$. A cut between sn and $p_B$ yields the update of $s_A$ with $s_C$. If an edge between the seam node and one of the adjacent pixels is cut, the new seam is considered in the final cost of the min-cut. The equivalence between old seam costs improvement and the min-cut of the graph is given only if the considered cost function $M$ is a metric. That is, $M$ must satisfy

$$M(s,p) = 0 \Leftrightarrow s = p$$
$$M(s,p) = M(s,p) \geq 0 \qquad\qquad (15)$$
$$M(p,q) \leq M(p,s) + M((s,q)$$

where the so-called triangle inequality, applied to the old seam problem, states that the cost of any edge originating from a seam node must be smaller than the sum of the costs of the two other edges. Hence, if $M$ is a metric, it is guaranteed that at most one of the edges originating from a seam node is cut. Notice that, the cut can theoretically be done such that none of the edges originating from sn in Fig. 5 is affected. In such cases, the old seam is overwritten, i.e. $s_A$ and $p_B$, and does not contribute to the final costs of the cut.

Kwatra et al. also use the approach described above for cases where the output texture to be synthesized has already been totally filled. Seams featuring high costs can then be refined by matching the surrounding region with the reference texture sample. The selected match can then be placed in the output texture to be synthesized such that the critical seam is totally covered. The border pixels of the overlap region are constrained to come from the synthetic texture in order to avoid visible seams. The graph is then built and the minimum cut determined as described above.

As can be seen, Kwatra et al's old seam handling potentially allows the improvement of old seams a posteriori when a new reference patch is placed at the corresponding locations. Their graph cut formulation is derived from but not equivalent to the work of Boykov at al. with respect to the $\alpha$-expansion algorithm. The latter allows any set of image pixels to change their labels to C, where $\alpha$ corresponds to C in the example depicted in Fig. 5. Notice that the mathematical basis for Kwatra et al.'s graph architecture is given in Qin, X. and Yang, Y.H., "Theoretical Analysis of Graphcut Textures", Technical Report 05-26, Department of Computer Science, University of Alberta, 2005,.

It has been argued that the graph cut formulation of the texture synthesis problem yields optimal seams between adjacent patches. As an overlap region 38 can encompass several old seams in practice, no adequate continuation patch 36 may be available in the texture sample 28. For that, the optimal seam 40 may still be visible and thus subjectively annoying.

Kwatra et al. tackle this problem by using feathering techniques around the seams. That is, the seams are smoothed by applying a low-pass filter, typically a Gaussian kernel, in their vicinity. Kwatra et al. report that, depending on the type of texture, multi-resolution splining may be a better alternative to feathering.

Multi-resolution splining, introduced by Burt and Adelson in Burt, P.J., and Adelson, E.H., "A Multiresolution Spline With Application to Image Mosaics", ACM Transactions on Graphics 2(4):217-236, October 1983, can be used to smooth "very obvious" seams. This approach has the drawback that the contrast of the output image can be reduced when a number of small patches have been placed in the output texture. Kwatra et al. manually choose between feathering and multi-resolution splining on a case-to-case basis.

The approach proposed by Kwatra et al. can be used for 2D still image as well as 3D video texture synthesis.

The extension of the graph cut formulation of the texture synthesis problem from 2D, i.e. spatial to 3D, i.e. spatio-temporal is straightforward. For the 3D synthesis, the video sequence is seen as a volume composed of voxels (volume elements). The patches are spatio-temporal cuboids that can be placed anywhere in the synthesized texture volume.

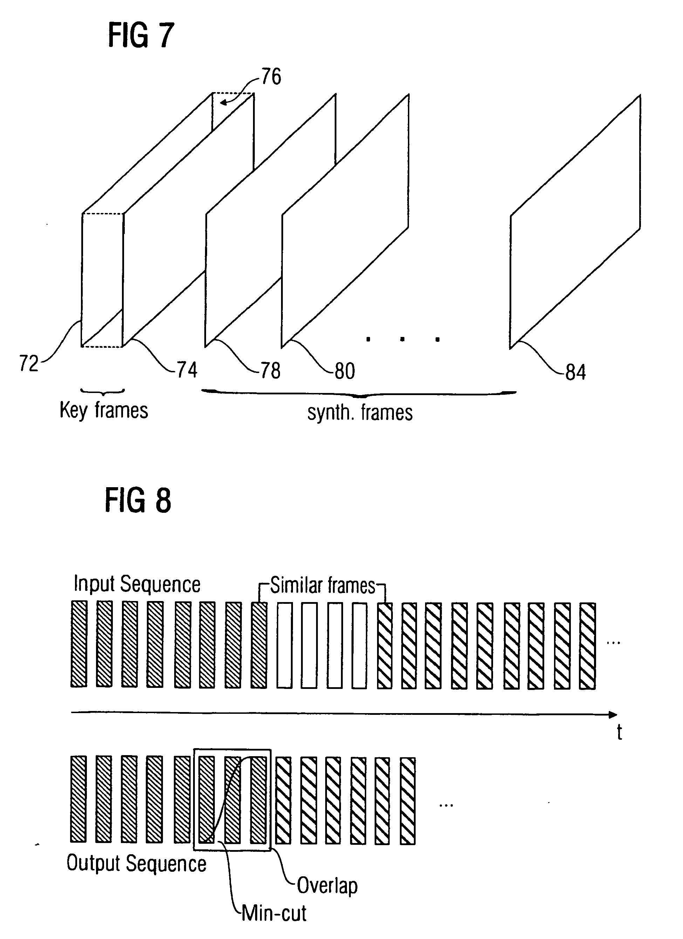

For better understanding, Fig. 7 shows a sequence of frames of a video sequence, where e.g. the first two frames 72, 74 correspond to reference frames or key frames from which the spatio-temporal cuboid 76 can be used to synthesize consecutive frames 78 to 84 of the video sequence. In case of spatio-temporal texture synthesis, the min-cut can be seen as a surface within a 3D spatio-temporal space. Kwatra et al. propose three video synthesis scenarios that depend on the properties of the given video sequence. They all have in common that they aim to infinitely loop the input video, i.e. the synthetic texture is an infinite temporal extension of the original one. In two of the scenarios, the input video sequence is assumed to be temporally stationary, while spatio-temporal stationarity is assumed in the third case. In the former case, the patch selection procedure can be restricted to the temporal axis, as no good matches can be expected in the spatial dimensions. Given spatio-temporal stationarity, all space and time dimensions must be explored for continuation patch detection. The different scenarios will be presented into more detail in the following. Note that, the approach by Kwatra et al. does not encompass a stationarity analysis. The latter is basically done subjectively or based on the trial-and-error method.

The first scenario consists in a constrained seam detection for video transitions. Is a given video texture temporally stationary, then a temporal seam can be determined by operating a pair-wise comparison of the corresponding frames. Has an adequate seam been detected, a graph can be built within a spatio-temporal window around that seam (compare Fig. 7). The spatio-temporal min-cut is thereby determined according to the approach described above (compare Fig. 4). Hence, the optimal temporal transition is individually determined for every pixel in the transition window. By repeating such transitions, the video sequence can be infinitely looped. The input video sequence should, however, be "long enough" to avoid obvious repetitions.

The second scenario is called the "random temporal patch offsets approach". It is mainly applied to short video clips for which an adequate seam may not be found by pair-wise frame comparison. This approach also takes into account that, in such clips, repetitions are easily noticeable. In this scenario, input reference texture patches are placed at random offsets in the synthetic texture volume. The seam is then computed within the whole spatio-temporal volume of the input texture.

The third scenario consists in the synthesis of spatio-temporal stationary video sequences. For the latter, the patch selection must explore both the temporal and the spatial dimensions. For that, the sub-patch matching procedure is used, which yields improved results. These ameliorations relate to the fact that some video textures feature a dominant motion that cannot be captured by simple frame-to-frame comparison. Thus, the seam detection approach used in the first scenario cannot be applied here. Kwatra et al. propose an alternative approach for looping spatio-temporal stationary sequences. Here, the same $k$ pictures of the input video are placed at the temporal beginning and at the temporal end of the output texture to be synthesized. These pictures are constrained to remain unmodified via infinite costs in the graph (compare Fig. 4). The output texture is then filled between the two groups of length $k$ under consideration of this constraint. Once the output texture has been filled, the first $k$ input frames are removed from it. Infinite looping is guaranteed by this approach as the $k^{th}$ frame in the output texture is identical to the last frame of the output before the removal operation. Note that the input video sequence cannot only be extended along the time axis, but also along the spatial dimensions if spatial translations are allowed in the synthetic texture volume.

Kwatra et al. do not prove that solving the min-cut problem is equivalent to obtaining optimal labeling of the graph including their definition of seam nodes. This gap is filled by Qin, X. and Yang, Y.H., "Theoretical Analysis of Graphcut Textures", Technical Report 05-26, Department of Computer Science, University of Alberta, 2005, who gave the mathematical proof of the optimality of label assignments using the graph-cut formulation described above.

An important prerequisite for the usage of the old seam optimization is that the cost function is a metric as already explained above. The cost function defined by Kwatra et al. is given in equation 14. The hypothesis that their cost function is a metric is gauged in the following, using a numerical example.

Let $a$(s) = (2,7,9), $b$(s) = (2,7,1), $a$(p) = (1,2,0) and $b$(p) = (3,3,0), where any color space (RGB, HSV, etc.) is assumed. M(s,p,A,B) can then be given as

$$M(s,p,A,B) = \frac{8+3}{0+1+6+0} = \frac{11}{7},\qquad(16)$$

where the $l_i$ norm is used and the gradients have been directly inserted into (16). Let $c$(s) = (2,7,1) and $c$(p) = (3,8,0). M(s,p,B,C) and M(s,p,A,C) can then be given as

$$M(s,p,A,B) = \frac{0+5}{6+0+0+1} = \frac{5}{7},\qquad(17)$$

$$M(s,p,A,B) = \frac{8+8}{0+1+0+1} = \frac{16}{2} = 8,\qquad(18)$$

where, again, the gradients have been directly inserted into equations 17 and 18. It can be seen from equations 16, 17 and 18 that

$$M(s,p,A,C) \geq M(s,p,A,B) + M(s,p,B,C)\qquad(19)$$

which contradicts equation 15. Hence, the cost function defined in equation 14 is not a metric such that the old seam optimization proposed by Kwatra et al. cannot be operated reliably.

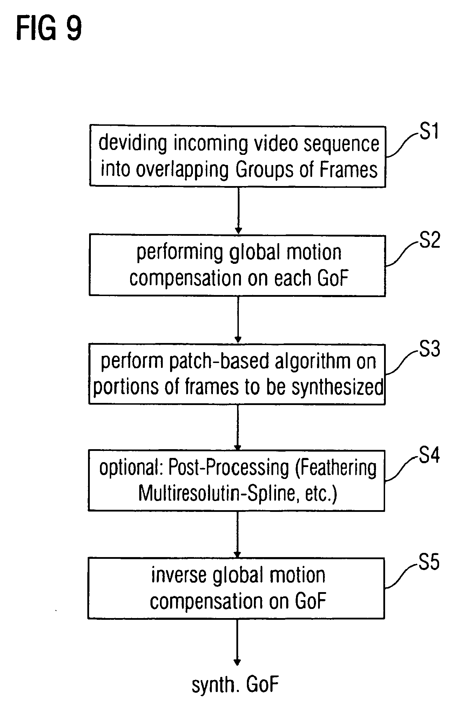

Fig. 9 shows a schematic flow chart of a method for synthesizing texture in a video sequence to be synthesized, the video sequence comprising a sequence of frames, wherein portions of consecutive frames of the video sequence form a spatio-temporal volume to be synthesized, the spatio-temporal volume being spatio-temporally bounded by remaining portions of the video sequence to be synthesized along a boundary of the spatio-temporal volume.

In a first step S1, an incoming video sequence consisting of consecutive frames is divided into overlapping groups of frames. Following step S1, a global motion compensation due to eventual camera movement is performed in a second step S2 on each group of frames (GoF = Group of Frames). After the frames of the group of frames have been motion compensated, a patch-based algorithm for texture synthesis can be applied on portions of the frames to be synthesized in a third step S3. After portions of the motion compensated group of frames have been synthesized, post processing on the portions of the synthesized frames can take place in an optional fourth step S4. Finally, inverse motion compensation has to be performed on the group of frames in a step S5 to get the synthesized group of frames as a result of the inventive method.

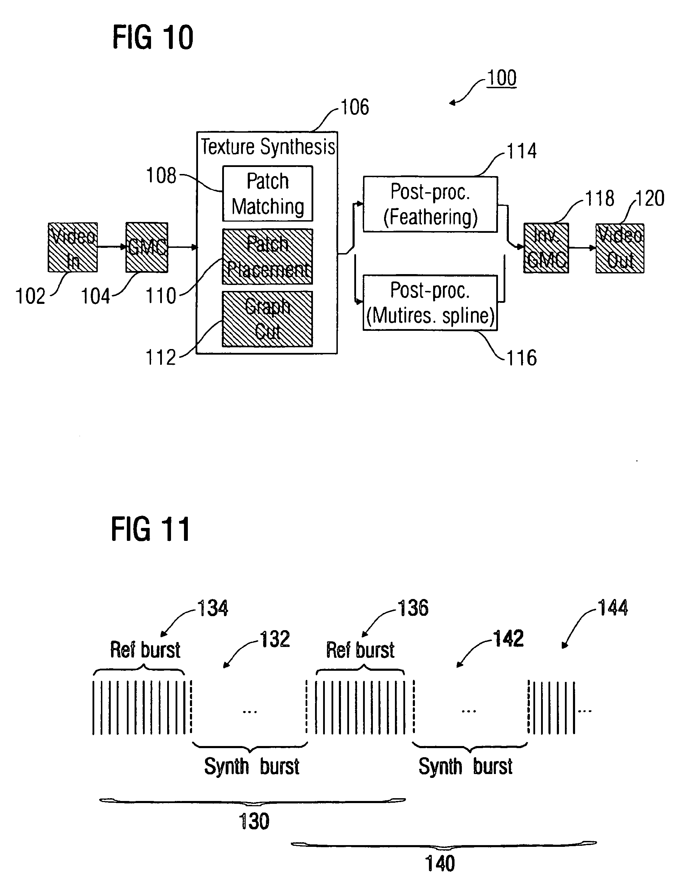

Fig. 10 shows a block diagram of an apparatus for synthesizing texture in a video sequence to be synthesized. The video sequence thereby comprises a sequence of frames, wherein portions of consecutive frames of the video sequence form a spatio-temporal volume to be synthesized, the spatio-temporal volume being spatio-temporally bounded by remaining portions of the video sequence to be synthesized along a boundary of the spatio-temporal volume.

The apparatus 100 comprises a means 102 for dividing the video sequence into temporally overlapping groups of frames, which is connected to a means for adapting portions of consecutive frames of the video sequence forming a spatio-temporal volume to corresponding texture volumes in reference or key frames by suitable warping in order to perform a global motion compensation (GMC = Global Motion Compensation). The global motion compensation means 104 is connected to a means 106 performing the texture synthesis of the portions of consecutive frames of the video sequence by using a patch matching means 108, a patch placement means 110, and a graph-cut means 112. The texture synthesis means 106 is further connected to post-processing means 114 and 116, which are connected to a means 118 performing an inverse global motion compensation. The block 118 delivers the synthesized video sequence at its output.

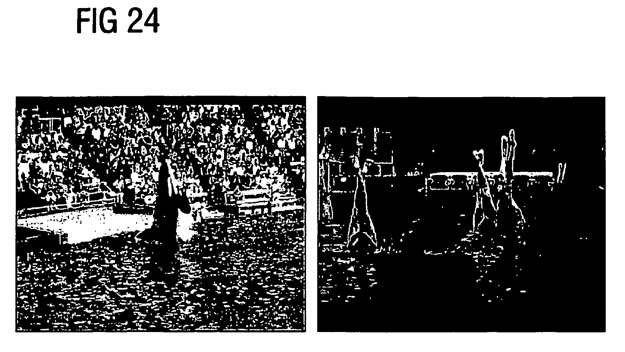

A detailed description of the steps described in Fig. 9 carried out in the blocks described in Fig. 10 will be given in the following sections referring to Figures 11 to 26.

In the first step S1 or the block 102 an incoming video sequence is divided into overlapping groups of frames, which is depicted in Fig. 11.

Fig. 11 shows two temporally overlapping groups of frames 130 and 140. The first group of frames 130 comprises a sequence of consecutive frames 132 to be synthesized arranged in between first consecutive reference or key frames 134 and second consecutive reference or key frames 136. The second group of frames 140 comprises a second sequence of consecutive frames 142 to be synthesized arranged in between the second consecutive reference frames 136 and third consecutive reference or key frames 144. The temporally overlapping area between the first and the second group of frames is the area of the second consecutive reference frames 136.

That is, the first group of frames 130 consists of a reference burst 134 that temporally precedes a burst of frames to be synthesized 132. The burst of frames to be synthesized or the SYNTH burst 132 is itself followed by another reference burst 136 in temporal order. The reference bursts 134, 136 are chosen such that they contain spatio-temporal reference texture patches required to synthesize the synthesis burst 132. The length of the respective bursts are determined depending on the video content. The second group of frames 140 consists of the last reference burst 136 of the first group of frames 130 and the next reference burst 144. The second SYNTH burst 142 is located between the corresponding reference bursts 136 and 144. Succeeding groups of frames are composed accordingly until the end of the video sequence is reached.

A first spatio-temporal volume to be synthesized is comprised by the sequence of consecutive frames 132 of the first group of frames 130 and the means 110 for placing is adapted to obtain spatio-temporal reference patches for the first spatio-temporal volume to be synthesized from the first 134 and/or second consecutive reference frames 136 of the first group of frames 130.

In the patch-based algorithm of Kwatra et al., it is assumed that a segmentation problem is solved, i.e. the conventional patch-based approach applies to a boundary-condition-free context, where the required texture samples are assumed to be given. This algorithm is extended for synthesizing texture in portions of consecutive frames of the video sequence by defining a boundary region spatio-temporally extending from the boundary of the spatio-temporal volume to be synthesized into remaining portions of the video sequence, by placing at least on spatio-temporal reference patch in an overlapping manner to fill the spatio-temporal volume to be synthesized such that the spatio-temporal reference patches placed at the transition between the boundary region and the spatio-temporal volume overlap the boundary region and applying a graph-cut algorithm to overlapping areas between the spatio-temporal reference patches and the boundary region to yield irregular boundaries between spatio-temporal reference patches and the boundary region to decide, which part of the spatio-temporal volume to be synthesized shall be synthesized by which part of the at least one spatio-temporal reference patch in the boundary region, respectively, to obtain a synthesized video sequence, the irregular boundaries comprising an irregular boundary extending within an overlapping area in the boundary region, where the spatio-temporal reference patches overlap the boundary region.

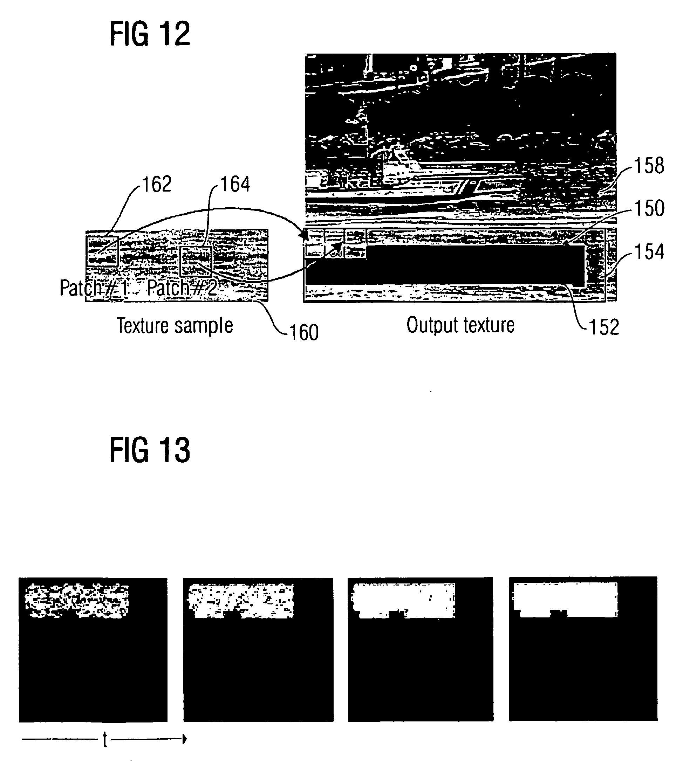

In other words, Kwatra's algorithm is extended to an algorithm for texture synthesis with boundary constraint handling. This corresponds to an in-painting approach, i.e. missing textures that can be thought of as spatio-temporal holes in a given video sequence are filled. This is a delicate task as both spatial and temporal inferences are required. Inappropriate texture synthesizer decisions may yield annoying artifacts as flickering or spurious spatial-temporal edges. Several in-painting approaches have been proposed in the literature. They typically relate to filling-in relatively small holes in a still image or a video sequence. These capabilities are, for instance, required in image or video restoration applications, where image or film material degradations can occur in the form of line scratches. Given the constrained synthesis scenario, the afore-mentioned patch placement procedure is affected. In fact, due to the constrained boundaries, the first texture patch cannot be selected at random from the input texture of the reference frames. The constrained texture synthesis principle is depicted in Fig. 12.

Fig. 12 shows a picture or a frame of a video sequence, wherein a portion 150 of the frame is to be synthesized. The portion or the spatio-temporal volume 150 is spatially bounded by remaining portions 158 of the frame along a boundary 152 of the spatio-temporal volume 150. Furthermore, Fig. 12 depicts a boundary region 154 spatially extending from the boundary 152 into the remaining portions 158 of the frame of the video sequence to be synthesized. Additionally, Fig. 12 shows a texture sample 160, which can e.g. be derived from the reference frames 134 or 136 of a group of frames 130. Spatio-temporal reference patches 162 and 164 that match the texture in the boundary region 154 have to be placed such that they spatio-temporally overlap the boundary texture in the boundary region 154. This implies that the texture in the constrained region or the boundary region 154 has to be the same as the texture to be synthesized in the portion 150 of the picture to be synthesized. This task is performed by an apparatus for analyzing texture in a still picture or a video sequence. Then, the graph-cut algorithm, which was described before, is applied to the aforesaid overlap region 154, which yields an irregular boundary between the spatio-temporal constrained region 154 and the synthetic video texture synthesized from the patches 162 and 164. This ideally decreases the perceptibility of the irregular boundary given an adequate cost function $M$.

The means 110 for placing can be adapted to derive the spatio-temporal reference patches 160 or 162, 164 from a database of predefined spatio-temporal reference patches. I.e. the texture sample 160 can be derived from a database stored at the decoder instead of being derived from the reference frames of a group of frames. In this case, information would be delivered to a decoder telling it to fill a spatio-temporal volume 150 to be synthesized corresponding to a water surface e.g. with predefined "water" reference patches. This can be considered as semantic side information.

For the case that not only portions of still images but also portions of consecutive frames of video sequences are being synthesized, irregular boundaries are also obtained in temporal direction. These irregular temporal boundaries are depicted in Fig. 13, where masks showing synthetic (white) and original (black) pixels in a partially synthesized video sequences are given for consecutive frames. It can be seen that a temporal, progressive fade-in of the synthetic texture is achieved. That is, the proportion of synthetic samples continuously grows in a transition phase between reference 134 and SYNTH bursts 132 until the whole region 150 to be synthesized is filled with synthetic samples or patches. Ideally, the fade-in occurs seamlessly. The same effect takes place at the transition from the SYNTH burst 132 to the second reference burst 136 of a group of frames 130 in the from of a fade-out process of the synthetic texture.

For a video sequence to be synthesized, the boundary region 154 is spatio-temporally extending from the spatio-temporal boundary 150 into the remaining portions 158 of the video sequence to be synthesized. That is, the spatio-temporal boundary region is a volumetric region whereas the spatio-temporal boundary is a two-dimensional area.

Bit masks to handle generic synthetic region shapes are defined. The masks allow tracking of the progress of the synthesis algorithm, of the state of the pixels in the region to be synthesized as well as in the reference texture.

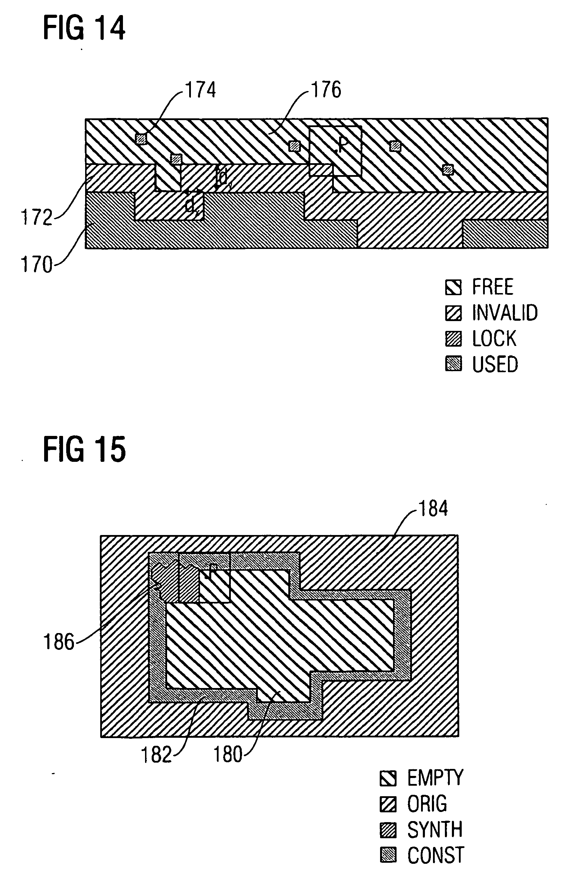

A reference texture samples bit mask, provided by an encoder, has four state bits. Such a texture samples bit mask for monitoring of texture sample state is depicted in Fig. 14.

The four reference texture sample states are LOCK, INVALID, FREE, and USED, as can be seen in Fig. 14. The LOCK state is assigned to pixels that do not belong to the texture to be synthesized under consideration. Due to implementational constraints, the reference texture sample is typically held in a cuboidal volume, even if the former is of arbitrary shape. The samples belonging to the spatio-temporal volume 150 to be synthesized therefore have to be distinguished from remaining portions of the video sequence via the LOCK state, whereby the remaining portions are referenced to with reference sign 170 in Fig. 14. All pixels that lie within a predefined region, e.g. half a spatio-temporal patch, of the LOCK area 170 are marked by the INVALID state. Thereby a spatio-temporal patch can be seen as a cuboid that represents a sub-volume of the total 3D-spatio-temporal volume to be synthesized. A typical patch size can be given as 32 pixels x 32 pixels x 20 frames, where a reduced temporal patch size of 20 frames is used in temporal direction to minimize a length of a required H.264/MPEG4/AVC burst. The area 172 marked INVALID corresponds to the boundary condition of the texture to be synthesized and cannot be used as patch centers while sampling the reference texture at a video encoder. Using an INVALID sample as patch center would yield texture patches with LOCK samples.

Pixels 174 in USED state correspond to reference texture locations that have already been sampled. Such locations in a corresponding neighborhood can be locked to avoid obvious repetitions in the synthetic texture. Samples in FREE state 176 denote pixel locations that have not been sampled yet. In cases where no FREE samples are available in the reference texture, the matching criterion is simply minimized without taking the LOCK labels into account. In Fig. 14, P represents a valid location for placement of the center of a continuation patch for texture synthesis.

Hence, in other words, an apparatus for encoding a video sequence to be synthesized into an encoded video stream, provides means for providing the encoding with side-information for a texture synthesizer including information 176 indicating the spatio-temporal volume 150 to be synthesized, information indicating the reference area 160, 162, 164 as to be used for synthesizing the spatio-temporal volume 150. The encoder is optionally adapted to further provide information 172 indicating a boundary region 154 spatio-temporally extending from the boundary 152 into the remaining portions 158 of the video sequence to be synthesized.

An example for an output bit mask, i.e. the state mask relating to the synthetic texture, is depicted in Fig. 15. The output mask contains four state bits: EMPTY, CONST, ORIG, SYNTH.

Regions 180 marked with the EMPTY state indicate where the pixels or the spatio-temporal volume 150 to be synthesized can be found in the output sequence.

The boundary region 154 is defined by regions 182 marked with the CONST state bit indicating those locations within the boundary constraint condition. I.e. defining the boundary region 154 comprises masking samples of the spatio-temporal boundary region 154 in consecutive frames 132, 142 to be partially synthesized. Hence, it is guaranteed by the texture analyzer and synthesizer that identified non-rigid texture is surrounded by a corresponding boundary region 154. The width of the latter constitutes a degree of freedom of the texture synthesis approach and can be advantageously determined according to the patch size. CONST pixels 182 can be replaced in the course of the synthesis process in order to obtain irregular transitions between synthetic texture and texture in the boundary region. CONST samples 182 are also used for matching, that is for determination of continuation patches in the spatial or spatio-temporal reference patches.

Locations 184 marked with the ORIG state correspond to remaining portions 158 or locations that are not modified by the synthesis algorithm and typically contain textures that differ from texture to be synthesized. Pixels 186 marked with the SYNTH state correspond to samples of the portions of the consecutive frames 132, 142 that have already been copied from the reference texture towards the texture to be synthesized. The shape of the SYNTH region 186 for a given continuation patch is determined by the graph-cut algorithm for the used metric in the graph-cut algorithm. Hence, a means for defining the boundary region is further adapted to mask samples of the remaining portions 158 of the video sequence and samples of the portions 150 of the consecutive frames to be synthesized.

The pixel marked with P in Fig. 15 corresponds to a valid location for placement of the center of a continuation patch taken from the amount of reference patches from the reference frames 134, 136. Note, that the texture region 150 to be synthesized can be of arbitrary spatio-temporal shape.

The means 110 for placing is hence adapted to update, during placement, the output mask indicating samples of the spatio-temporal volume 150 to be synthesized to differentiate, among the samples of the spatio-temporal volume 150, between samples which have been synthesized and samples which still have to be synthesized.

The means 110 for placing spatio-temporal reference patches is further adapted to form an index mask, the index mask indicating the spatio-temporal location of each synthesized pixel of the spatio-temporal volume 150 to be synthesized within the spatio-temporal reference patch 160 derived from key frames 134, 136 of the video sequence to be synthesized being different from the consecutive frames 132. In other words, the index mask holds the location of each pixel of the synthetic texture in the texture sample 160. The index mask thus has the same resolution as the output texture. This mask is required for several operations in the course of the synthesis process. For example, the index mask can be used to determine patch transitions by locating index discontinuities. Furthermore, it can then be used to, for instance, determine transition costs. The index mask can also be used for post-processing operations such as feathering.

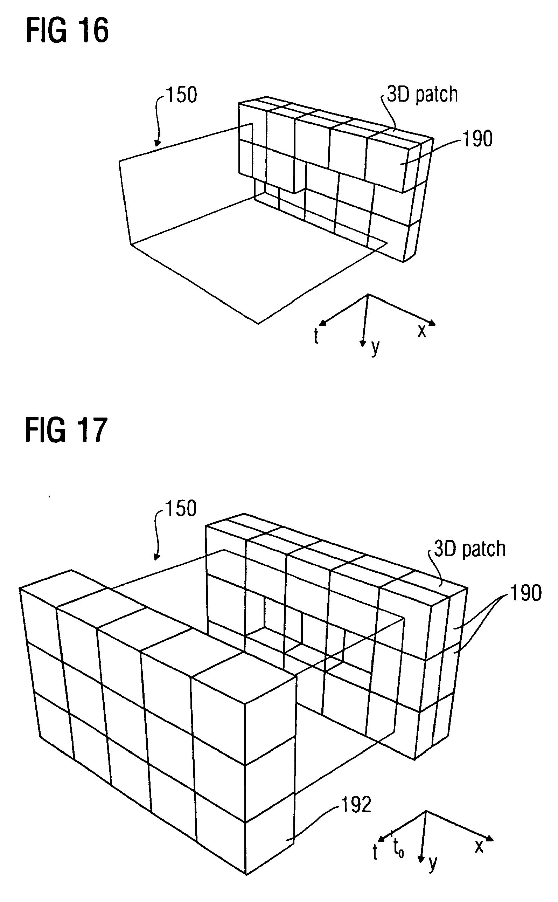

A filling order of the 3D-patches, i.e. a spatio-temporal hole 150 in the synthesis frames 132 in between the key frames 134, 136 can have a significant impact on the quality of the overall synthesis result. As already noticed, the texture synthesis is done in a constrained environment. That is, a spatio-temporal extrapolation of a given, temporally preceding texture sample is operated and is to be conformed to temporally subsequent texture samples at some stage. It should be ensured that special precautions are taken at the transition between natural and synthetic textures. An intuitive approach may consist in growing synthetic texture areas 150 to be synthesized from one temporal end of a group of frames to the other, i.e. from the first key frame 134 to the second key frame 136. However, this may yield discontinuities or unnatural motion at the second spatio-temporal end of the considered spatio-temporal texture volume to be synthesized. Fig. 16 schematically depicts the spatio-temporal texture synthesis from one temporal end to the other. This procedure can be also called "scanline filling procedure".

In case the above-described scanline filling procedure leads to annoying subjective artifacts, this effect can be attenuated by ensuring a minimum overlap between extrapolated 3D-patches 190 and the constrained texture region, which allows construction of sufficient complex graphs such that min-cut optimization potentialities with respect to the cut path are given. However, temporal inconsistencies may still be easily noticeable. An alternative spatio-temporal filling strategy consists in displacing the conversion point of the synthetic spatio-temporal texture to be synthesized towards the middle of the corresponding spatio-temporal volume. This is by example shown in Fig. 17.

Fig. 17 depicts a filling strategy wherein the means 110 for placing the spatio-temporal reference patches is adapted to synthesize the spatio-temporal volume 150 to be synthesized such that first spatio-temporal reference patches 190 derived from first reference frames temporally before the consecutive frames 132, 142 to be synthesized are used for synthesizing the spatio-temporal volume 150 towards a temporal reference to in between the first reference frames 134 and the second reference frames 136 temporally after the consecutive frames 132 to be synthesized and second spatio-temporal reference patches 192 derived from the second reference frames 136 are used for synthesizing the spatio-temporal volume 150 from the second reference frames 136 towards the temporal reference.

I.e. the means 110 for placing is configured to start filling the spatio-temporal volume 150 to be synthesized by alternately placing a first predefined spatio-temporal reference patch 190 temporally overlapping a side of the boundary region 154 temporarily preceding the spatio-temporal volume 150 to be synthesized and a second predefined spatio-temporal reference patch 192 temporally overlapping a side of the boundary region 154 temporarily succeeding the spatio-temporal volume 150 to be synthesized.

The depicted filling strategy in Fig. 17 complies with a helical filling strategy. Inconsistencies due to matching extrapolated textures growing in different spatio-temporal directions is here hidden within the synthetic texture, which can improve the subjective perception of the latter.

Notice that, in Fig. 16 and Fig. 17, the 3D-spatio-temporal patches 190 are represented as gray cuboids. Both approaches only differ in the patch placement chronology as already explained above. Fig. 16 depicts the scanline filling method, where the filling order is x, y, t, x, y,... In contrast, the helical filling approach shown in Fig. 15, is characterized by the filling order x, y, t, t, ..., x, y, t, ... This filling order is, however, not respected in Fig. 17 for legibility reasons.

The texture 150 to be synthesized is grown patch-wise, as already explained above. That is, the current up-date texture patch 162, 164 is placed in an overlapping manner into the texture 150 to be synthesized. Kwatra et al. propose the graph-cut formulation with a cost function according to equation 14. The distance between color components of two adjacent pixels s and p is determined in the numerator $N_M(s,p,A,B)$. The denominator corresponds to gradients in the neighborhood of s and p. It is assumed that, due to visual masking effects, cuts should be placed in texture areas showing high gradients, that is high frequency components, where seams are expected to be less visible.

The HSV color space (HSV = Hue, Saturation, Value) is used in the cost function due to its perceptual uniformity. The cost function is thus reformulated as follows

$$N'_M(s,p,A,B) = d(H_a(s) - H_b(s)) + d(H_a(p) - H_b(p)) + \|S_a(s) - S_b(s)\| + \|S_a(p) - S_b(p)\| + \|V_a(s) - V_b(s)\| + \|V_a(p) - V_b(p)\| \qquad (20)$$

The $\ell_1$ norm is used for the saturation and value components. It must be accounted for the fact that the hue component represents an angle. Hence must another norm

$$d(H_a(s) - H_b(s)) = \min(\|H_a(s) - H_b(s)\|, 2\pi - \|H_a(s) - H_b(s)\|) \qquad (21)$$

were $\|\ \|$ again corresponds to the $\ell_1$ norm.

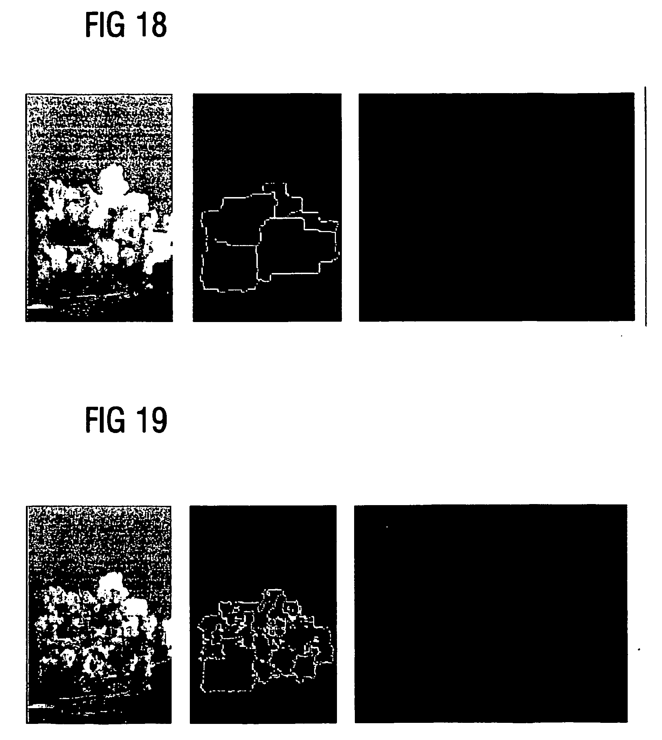

As already discussed further above, the cost function defined in equation 14 is not a metric, such that optimization of old seams is not used. The cost function according to equation 20 is motivated by the fact that the usage of a metric in combination with old seam optimization typically yields relatively regular spatio-temporal cuts that in turn yield noticeable spatial and temporal artifacts. This is shown by example in Fig. 18 for a graph texture synthesis with a metrical cost function. On the left side of Fig. 18, a picture with synthetic smoke is shown. In the middle Fig. 18 shows spatio-temporal min-cuts seen from their temporal front. The right side of Fig. 18 shows a 3D-min-cut representation.

From Fig. 18 it can be seen that especially the temporal cuts are mostly planar. This corresponds to an abrupt transition between neighboring spatio-temporal patches, which typically yields jerky motion.

In contrast, Fig. 19 shows a graph-cut texture synthesis with a non-metrical cost function according to equations 14, 20, and 21. Again, on the left, a picture with a synthetic smoke is shown, whereas in the middle the temporal front view of min-cuts of the graph cut algorithm is shown. The right side of Fig. 19 again shows a 3D-min-cut representation.

It can be seen that applying a non-metrical cost function typically yields significant improvements of the min-cut properties as spatial and temporal transitions are more gradual.

Dominant structures can be accounted for to improve synthesis results. The means 110 for placing is therefore configured to start filling the spatio-temporal volume 150 to be synthesized according a priority information of regions of the spatio-temporal volume to be synthesized, wherein the priority information depends on visual information of neighboring volumes in the remaining portions of the video sequence, i.e. the portions that do not have to be synthesized.

For example, the priority information can be determined such that volumes to be synthesized next to volumes comprising visual information being particularly relevant for human perception have a higher priority than volumes to be synthesized next to volumes comprising visual information being less relevant for human perception, so that the patch placement starts at the firstly mentioned volumes. Hence, the order of the patch placement is determined by visually dominant volumes e.g. in the spatio-temporal boundary region.

By integrating this method into the patch-based synthesis framework structure awareness is used to initialize the spatio-temporal synthetic volume with additional constraint patches stemming from the given texture samples, such that dominant structures are prolonged into the synthetic volume. Patch selection is done as already described, except that the patch placement order is dictated by intrinsic texture properties.

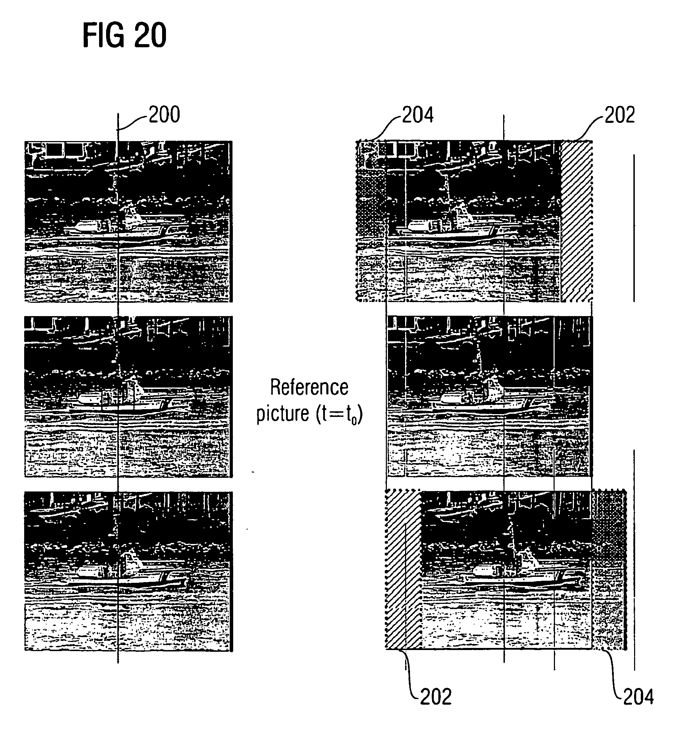

Known patch-based graph-cut algorithms for texture synthesis like the one of Kwatra et al. implicitly assume a static camera scenario. This is in general a very restrictive framework as most natural video sequences feature some degree of camera motion. This constraint is thus being relaxed in order to achieve a generic texture synthesis for content-based video coding. In the step S2 or the means 104 global camera motion compensation (GMC) is performed. The global camera motion compensation, in the following also called temporal alignment, corresponds to an iterative estimation process as the camera motion is typically not known a priori. Fig. 20 depicts the general principle of the temporal alignment.

The left column of Fig. 20 shows three frames of a test sequence that features a translational global camera motion from left to right. The shown pictures are 30 frames or 1 second apart, respectively, the upmost one being the first to occur in temporal order. It can be seen in the original video sequence (left column of Fig. 20) that the background, e.g. around the middle column 200 of the pictures, is moving due to camera motion.

Defining a reference time instance $t_o$ and aligning the temporally neighboring pictures to it yields the result depicted in the right column of Fig. 20. Temporal alignment corresponds to warping (simple translation in this example) the upper and the lower pictures in the right column of Fig. 20 towards the reference picture (middle picture in the right column of Fig. 20) such that the background appears to be static. Ideally, the motions of the water and the ship are thereby preserved. Note that the hatched areas 202, 204 in Fig. 20 correspond to covered 202 or uncovered 204 regions in the aligned pictures.

Warping hence means temporally translating detail-irrelevant picture areas of a frame in the direction of e.g. the corresponding key frames 134, 136 in the reference bursts (first and last frames in the group of frames). The warping is thereby performed by means of a planar perspective motion model, as defined by MPEG-7 parametric motion descriptor. The perspective motion model is described by the following equations:

$$x' = \varphi_8^x(x, y) = \frac{a_1 + a_3 x + a_4 y}{1 + a_7 x + a_8 y} \quad,$$

$$(22)$$

$$y' = \varphi_8^y(x, y) = \frac{a_2 + a_5 x + a_6 y}{1 + a_7 x + a_8 y} \quad.$$

The coordinates (x', y') represent transformed coordinates of a starting pixel with the coordinates (x, y). The eight-model parameters are described by the coefficients $a_1, ..., a_8$. The planar perspective model holds for random movements of arbitrary rigid bodies if the camera operations are limited to mere rotation and zoom. With planar rigid bodies, random camera operations are admissible. In practice, these conditions are typically met for a short time period of a group of frames. The motion parameters $a_1$ to $a_8$ of the identified detail-irrelevant texture areas with regard to corresponding texture areas of the respective key frames are estimated by a texture analyzer. Warping may only be performed if respective texture areas are present and/or are identified in the first 134 or last frames 136 of a group of frames 130. Only those points of the transformed texture area, which lie in the corresponding texture area of the key frames 134, 136 of a group of frames, can be used for synthesis. The remaining points are marked as non-classifiable in the current frame, whereby a synthesizable texture area is reduced in size. This method is repeated with the last frame of the group of frames.

Non-classifiable areas or volumes, i.e. areas or volumes that cannot be synthesized by placing formerly unused reference patches to fill the area or volume to be synthesized, can be filled by means of, for example, Markovian synthesis methods after patch-based synthesis has been conducted. For example, it may happen that after forward-warping the volume to be synthesized is partially moved out of the genuine pixel raster of the video so that after interpolating the forward-warped volume onto the pixel raster, a part or parts of the volume to be synthesized is not patched. Therefore, after backward-warping these portions of the volume to be synthesized have not been filled. Therefore, these portions may be filled by means of Markovian synthesis. The principle of Markovian synthesis has been addressed in the introductory portion. Non-classifiable areas or volumes are synthesized by taking statistical properties of a neighborhood of the remaining areas or volumes to be synthesized into account. Structure-awareness is exploited here to achieve good synthesis results. Spatio-temporal texture properties are thereby considered. Hence, neighborhood statistics of sample locations to be synthesized are matches with neighborhood statistics of known samples. Unknown samples are replaced by known samples featuring similar neighborhood statistics.

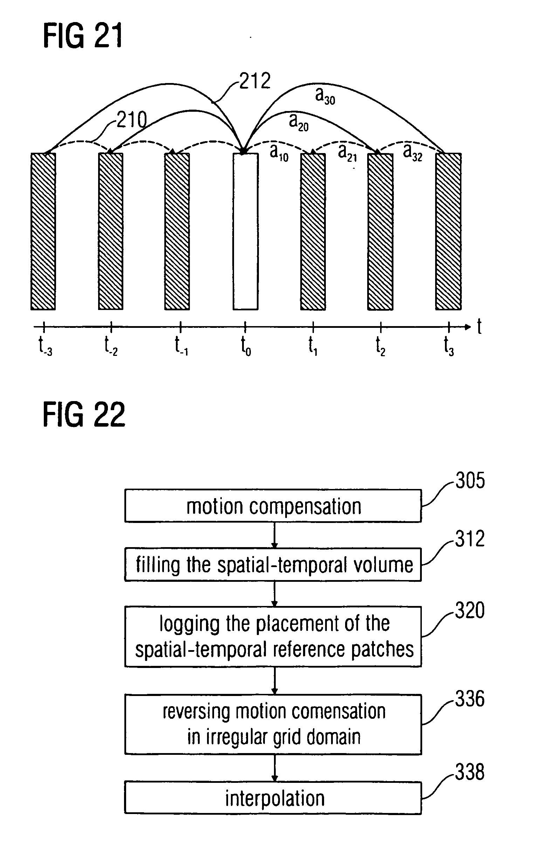

A texture synthesizer warps the texture of the first or last frames of the current group of frames in the direction of the respective synthesizable texture region identified by a texture analyzer using side information. This is shown in Fig. 21.

Fig. 21 shows the principle of temporal alignment of a picture burst. A first step of the temporal alignment algorithm now consists in determining the perspective motion model described by the equation 22 between adjacent pictures starting from the outmost frames as shown in Fig. 21. Note that the frame-to-frame motion estimation is symbolized by the dashed arrows 210 in Fig. 21. Once the frame-to-frame global motion is known, the reference time instance $t_0$ is shifted towards the designated frame, for example, a mid-burst picture by accumulation of the motion parameter sets. This is represented by the solid arrows 212 shown in Fig. 21. The accumulation can be obtained by chaining single, i.e. frame-to-frame, perspective transformations. Let (x, y) be a sample location in a current frame, further let (x', y') be the corresponding, warped sample location in a temporally succeeding frame. Finally, let x", y" be the warped sample location of x', y' in a corresponding temporal successor frame. If and are defined as the perspective transformation in x and y directions, then x" y" can be computed by

$$x'' = \varphi_8^x(x', y') = \frac{a'_1 + a'_3\, x' + a'_4\, y'}{1 + a'_7\, x' + a'_8\, y'}$$

$$(23)$$

$$y'' = \varphi_8^y(x', y') = \frac{a'_2 + a'_5\, x' + a'_6\, y'}{1 + a'_7\, x' + a'_8\, y'}$$

Determining the accumulated motion parameters now corresponds to determine $\hat{\varphi}_8^x(\ )$ and $\hat{\varphi}_8^y(\ )$ such that

$$x'' = \hat{\varphi}_8^x(x', y')$$

$$(24)$$

$$y' = \hat{\varphi}_8^y(x, y).$$

The inference of $\hat{\varphi}_8^x(\ )$ and $\hat{\varphi}_8^y(\ )$ from equation 22 is straightforward and can be initiated through insertion of equation 22 into equation 23 as follows:

$$x'' = \frac{a'_1 + a'_3\, a + a'_4\, a_2 + (a'_1\, a_7 + a'_3\, a_3 + a'_4\, a_5)x + (a'_1\, a_8 + a'_3\, a_4 + a'_4\, a_6)y}{1 + a'_7\, a_1 + a'_8\, a_2 + (a'_7 + a'_7\, a_3 + a'_8\, a_5)x + (a'_8 + a'_7\, a_4 + a'_8\, a_6)y}$$

$$(25)$$

$$y'' = \frac{a'_2 + a'_5\, a_1 + a'_6\, a_2 + (a'_2\, a_7 + a'_5\, a_3 + a'_6\, a_5)x + (a'_2\, a_8 + a'_5\, a_4 + a'_6\, a_6)y}{1 + a'_7\, a_1 + a'_8\, a_2 + (a_7 + a'_7\, a_3 + a'_8\, a_5)x + (a_8 + a'_7\, a_4 + a'_8\, a_6)y}$$

The genuine perspective transformation formulation defined in equation 22 can be obtained by normalizing equation 25 by

$$\alpha_N = 1 + a'_7 a_1 + a'_8 a_2 \qquad (26)$$

which yields

$$x'' = \frac{\alpha_1 + \alpha_3 x + \alpha_4 y}{1 + \alpha_7 x + \alpha_8 y}$$

$$(27)$$

$$y'' = \frac{\alpha_2 + \alpha_5 x + \alpha_6 y}{1 + \alpha_7 x + \alpha_8 y}$$

with

$$\alpha_1 = \frac{a'_1 + a'_3 a_1 + a'_4 a_2}{1 + a'_7 a_1 + a'_8 a_2}$$

$$\alpha_2 = \frac{a'_2 + a'_5 a_1 + a'_6 a_2}{1 + a'_7 a_1 + a'_8 a_2}$$

$$\alpha_3 = \frac{a'_1 a_7 + a'_3 a_3 + a'_4 a_5}{1 + a'_7 a_1 + a'_8 a_2}$$

$$\alpha_4 = \frac{a'_1 a_8 + a'_3 a_4 + a'_4 a_6}{1 + a'_7 a_1 + a'_8 a_2}$$

$$\alpha_5 = \frac{a'_2 a_7 + a'_5 a_3 + a'_6 a_5}{1 + a'_7 a_1 + a'_8 a_2}$$

$$\alpha_6 = \frac{a'_2 a_8 + a'_5 a_4 + a'_6 a_6}{1 + a'_7 a_1 + a'_8 a_2}$$

$$\alpha_7 = \frac{a_7 + a'_7 a_3 + a_8 a_5}{1 + a'_7 a_1 + a'_8 a_2}$$

$$\alpha_8 = \frac{a_8 + a'_7 a_4 + a'_8 a_6}{1 + a'_7 a_1 + a'_8 a_2} \qquad (28)$$

Equations (27) and (28) can now be applied recursively to estimate large global displacements between two frames of arbitrary temporal distance from each other. This is however limited by estimation and modeling inaccuracies that accumulate with the number of successive recursions (Smolic, A., "Globale Bewegungsbeschreibung und Video Mosaiking unter Verwendung parametrischer 2-D Modelle, Schätzverfahren und Anwendungen", PhD Thesis, Aachen University of Technology (RWTH), Germany, May 2001). Notice that the temporal alignment algorithm is applied on a full GoP (compare Fig. 9).

Once the temporal alignment has been operated in step S2 or means 104, the assumptions of Kwatra et al.'s graph-cut algorithm with respect to the camera ideally holds. In subsequent steps texture synthesis can now be executed as described above in steps S3 and the optional step S4, which are carried out by the means 106 and optional means 114 and 116. Finally, in the last step S5, after the synthesis has been conducted, the synthesized textures are warped back towards their genuine coordinate system with inverse temporal alignment operations.

According to the above, synthesis and subsequent back-warp involved two interpolation operations per synthetic sample in the genuine coordinate system (non-aligned video). First a spatio-temporal volume, including the volume to be synthesized, the boundary area as well as the reference texture volume, is warped from its genuine coordinates to the warped coordinates which will in general be non-integer values. The genuine coordinates form a genuine and regular pixel raster, e.g. raster(x,y,t) with luma and/or chroma intensenty/ies I(x,y,t) at rectangular or regular grid locations (x, y, t) with $x,y,t \in$ IN, and I indicating the intensity in terms of luma and/or chroma. After forward warping, the grid becomes irregular, i.e. the pixels leave their original pixel positions (x, y, At) by amount and direction depending on the motion compensation. This irregular grid is meant in the following when mentioning the "genuine corrdinates of the aligned video". Hence, a first interpolation to yield integer-valued warped coordinates is performed, for example onto the original pixel raster. By this measure, the intensities of the pixels have to be interpolated. It should be recalled that the above measures are performed with both the volume to be synthesized as well as the reference texture volume. After this first interpolation, patching is performed as indicated above, i.e. warped and interpolated patches are patched onto the volume to be synthesized as described above. In a back-warp operation, the already interpolated integer-valued warped coordinates are transformed back to the genuine coordinate system which will in general result again in non-integer values. Hence, a second interpolation is necessary. This potentially yields overly smoothed synthetic textures even if good interpolation filters are used.

For that, according to one embodiment, cautious back-warping is conducted in order to minimize the number of interpolations per sample negatively affecting the picture quality and thus improve the quality of the synthetic texture. This is achieved by monitoring (via adequate index type masks) the warped but not interpolated coordinates of reference patches in the aligned (warped) video used during patching, the exemplarily translative displacement of these reference patches in the genuine-coordinate aligned video as prescribed by the continuation patch determination algorithm, and the offset vectors from a respective origin of the placed spatio-temporal reference patches in the reference texture volume to those pixels of those placed spatio-temporal reference patches which have been assigned to the volume to be synthesized and/or the boundary area surrounding same according to the above mentioned graph-cut algorithm. For example, per patch used during filling the volume to be synthesized, the following information could be stored: a predetermined pixel position of each patch such as the centroid of the respective patches to define the coordinates $(Xp_{atch}, y_{patch}, t_{patch})$ of the patch in the irregular forward-warped grid domain; offset vectors $\delta_{patch,pixel\#} = (\delta x_{patch,pixel\#}, \delta y_{patch,pixel\#}, \delta t_{patch,pixel\#})$ per pixel used in the respective patch for filling the volume to be synthesized and the boundary area, respectively, which, for example, indicate the deviation of each pixel from the aforementioned centroid within the individual patch. By this measure, a irregular grid of dots $(x_{patch} + \Delta x_{patch} + \delta x_{patch, pixel\#}, y_{patch} + \Delta y_{patch} + \delta y_{patch,pixel\#}, t_{patch} + \Delta t_{patch} + \delta t_{patch,pixel\#})$ with non-interpolated intensities results in the filled volume to be synthesized and the boundary area, with $\Delta_{patch} = (\Delta x_{patch}, \Delta y_{patch}, \Delta t_{patch})$ being the exemplarily translative displacement according to the placement algorithm for the respective patch which is also stored during filling. That is, while the above-mentioned interpolation succeeding the forward-warping may have been performed in order to be able to optimally place the patches in the interpolated and regular grid domain as indicted above with the intensities being interpolated as described above, the actual placement of the spatio-temporal reference patches in the spatio-temporal area to be synthesized in the aligned video is done only virtually or mathematically, i.e. in the irregular grid domain, with the intensity values being preserved. Rather, the actual placement is performed after a back-warping of the resulting non-integer warped coordinates stored during the above-mentioned monitoring. After this back-warping, an actual interpolation of the back-warped (non-integer) coordinates to integer-valued coordinates is performed. This interpolation involves the only effective interpolation of luma and/or chroma intensities. Hence, the synthetic texture in the genuine coordinate system can be obtained through direct access of the texture samples in the genuine coordinate system and the virtual warping, displacement and back-warping, which reduces the number of required, effective interpolations per synthetic sample to one. The accuracy of the genuine coordinates is a degree of freedom of the present system. Full-pel or sub-pel accuracy can be used depending on the given texture properties.

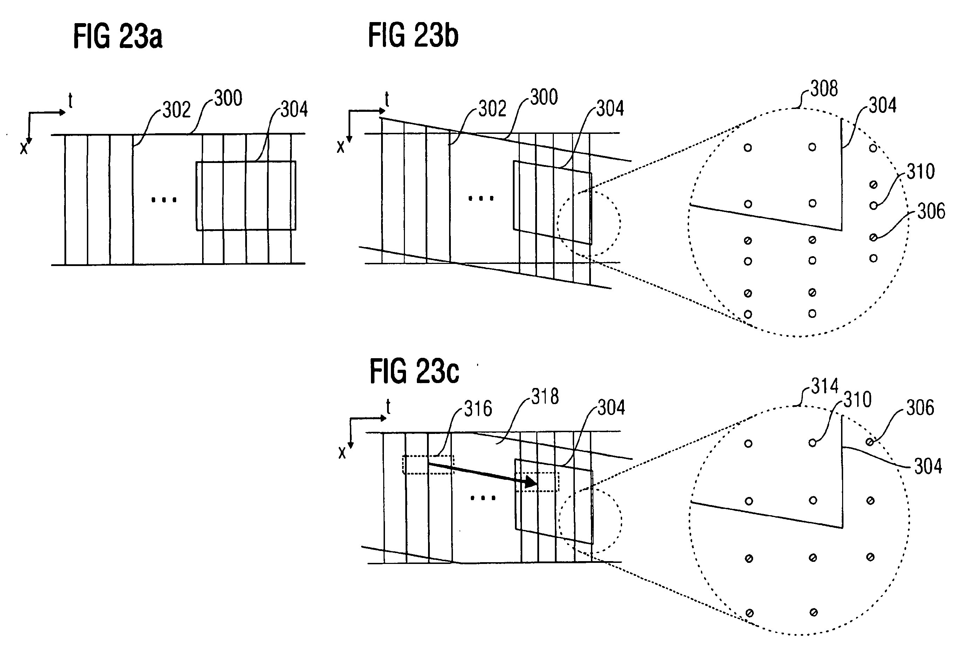

Fig. 22 shows an embodiment of a "cautious back-warping" method for synthesizing texture in a video sequence to be synthesized. The method is described with additional reference to Fig. 23a-f illustrating different states of the video sequence comprising a sequence of frames. In the latter figures, the video sequence 300 is illustrated as being composed of consecutive pictures or frames 302 and as having a spatio-temporal volume 304 to be synthesized. In order to ease the understanding, the video sequence is shown as viewed from the top so that the y axis is directed perpendicular to the paper plane, while the time axis extends horizontally with increase in time to the right hand side und the x axis extends vertically.

The method starts with applying 305 motion compensation or motion alignment to a part of the video sequence, this part being, for example, the one shown in Fig. 23a. The part to which motion compensation is applied encompasses the spatio-temporal volume 304 or even more precise, the area surrounding same, as well as the portion of the video 300 from which the spatio-temporal reference patches not shown in Fig. 23a will be derived.

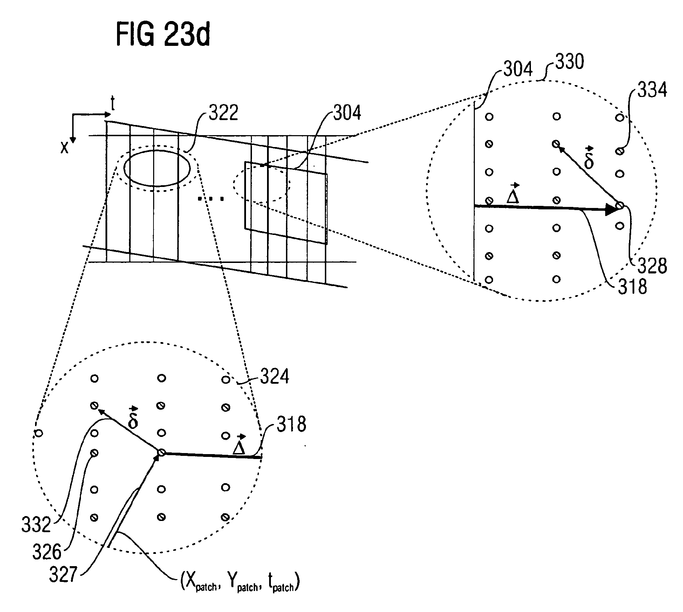

As shown in Fig. 23b, step 305 involves warping genuine regular grid coordinates of pixels 306 (illustrated in the enlarged video portion 308 as black circles) neighboring the spatio-temporal volume 304 to be synthesized. Furthermore, 305 involves warping pixels of spatio-temporal reference patches formed by the video sequence to be synthesized outside the spatio-temporal volume 304 to be synthesized to respective irregular grid coordinates (this is not shown in Fig. 23b but may be seen from Fig. 23d to be described in the following). To be more precise, in the enlarged portion 308, the irregular grid of pixels 306 neighboring the spatio-temporal volume 304 to be synthesized are illustrated with black circles, with the irregularity of the irregular grid resulting from warping pixels neighboring the spatio-temporal volume 304 to be synthesized from their original regular or rectangular grid positions 310 indicated by white circles in 308. As can be seen, the motion alignment leads to a "bending" of the periphery of the spatio-temporal volume 304 to be synthesized. The spatio-temporal volume 304 may also be subject to this effect. This is however not depicted in Fig. 23b for legibility reasons.

It should be noted that the motion compensation or motion alignment in step 305 is not restricted to the aforementioned motion alignment. The motion alignment could affect the frames as a whole or could be performed block-wise, for example. Moreover, the warping movements could address more complex motions of the camera and/or the scene or less complex motions compared to the above warping formulae.

After step 305, the spatio-temporal volume 304 is filled by placing spatio-temporal reference patches onto the spatio-temporal volume 304 to be synthesized. Although the placement could be conducted in the irregular grid or sub-pel domain, Fig. 23c illustrates the case where the filling step comprises a pre-interpolation. That is, according to an embodiment of the present invention, before the actual placement of spatio-temporal reference patches onto the spatio-temporal volume 304 takes place, the irregular grid of pixels neighboring the spatio-temporal volume 304 to be synthesized as well as the irregular grid of pixels of the spatio-temporal reference patches are interpolated onto the genuine regular grid of pixel locations 310. The result is illustrated in the enlarged portion 314. As can be seen, by the pre-interpolation, the pixels 306 neighboring the spatio-temporal volume to be synthesized have been moved or warped onto the regular grid positions 310. At this stage, the regular grid positions 310 within the warped spatio-temporal volume 304 to be synthesized are empty and have to be filled, i.e. their luma and/or chroma values have to be determined. For illustration purposes only, it is noted that the luma and/or chroma values of pixels 306 have been derived from the luma and/or chroma values of these pixels at their irregular grid positions as shown in Fig. 23b.

The filling step 312 may be performed by use of the graph-cut algorithm with spatio-temporal reference patches overlapping the boundary region as described above. However, other filling algorithms may be used as well in the present embodiment. For example, the graph-cut algorithm may be replaced by an interpolation between overlapping areas between the spatio-temporal reference patches and spatio-temporal reference patches and the boundary area, respectively. In this regard, the spatio-temporal reference patches may have any shape and size.

Independently from the filling algorithm used for filling the spatio-temporal volume 304 to be synthesized, Fig. 23c illustrates the patch placement exemplarily with respect to one spatio-temporal reference patch 316. As shown, the patch placement involves, for example, a translative displacement of the spatio-temporal reference patch 316 from its original position to a position within the spatio-temporal volume 304 to be synthesized as illustrated by arrow 318. Of course, more than one reference patch is used to fill the spatio-temporal volume 304. Since both, the spatio-temporal reference patch 316 as well as the pixels 306 surrounding the spatio-temporal volume 304 to be synthesized have been pre-interpolated, the algorithm used to fit the spatio-temporal reference patch 316 to the area surrounding the spatio-temporal volume 304 to be synthesized as well as the spatio-temporal reference patch pixels that have already been placed onto the spatio-temporal volume 304 to be synthesized may be performed in the regular rectangular grid domain of pixel positions 310.

Parallel to the filling step 312, a logging 320 of the placement of the reference patches 316 is performed. The logging step 320 involves emulating the placement of the patches 316 by translative movement of the irregular grid coordinates of pixels of the spatio-temporal reference patches into the spatio-temporal volume to be synthesized. This is illustrated in Fig. 23d. The irregular grid positions of the pixels of a spatio-temporal reference patch used for filling empty positions of the spatio-temporal volume 304 to be synthesized, are exemplarily encircled at 322 and are illustrated in the enlarged portion 324 with black circles 326 individually. A vector $(x_{patch}, y_{patch}, t_{patch})$ points to a specific one of the pixels 326 from some origin (not shown in Fig. 23d). This reference patch pixel 326 is, for example, a centroid of the spatio-temporal reference patch. Beginning at this reference patch pixel 326 pointed to, a displacement vector 318 $(\overline{\Delta})$

points to a position 328 within the spatio-temporal volume 304 to be synthesized as illustrated at enlarged portion 330. The displacement vector 318 is derived during the placement in step 320 in units of, for example, a grid position pitch of the regular grid positions 310. Vectors 327 and 328 are not the only vectors which are logged in step 320 during the placement of individual spatio-temporal reference patches. Rather, offset vectors 332 ($\delta$) are also retrieved and temporarily stored, which point from the centroid reference patch pixel to each of the individual pixels 326 of the reference patch used for filling the spatio-temporal volume 304 to be synthesized. It is emphasized, that vectors 327 and 332 point to the irregular grid positions of the pixels of the reference patches used for filling the spatio-temporal volume 304. Using all these vectors 327, 318 and 332, it is possible to emulate the patch placement by translatively moving the irregular grid pattern of these pixels 326 into the spatio-temporal volume 304. The resulting irregular grid within the spatio-temporal volume 304 is illustrated in 330 by use of the black circles 334 comprising the displayed centroid reference pixel 328.

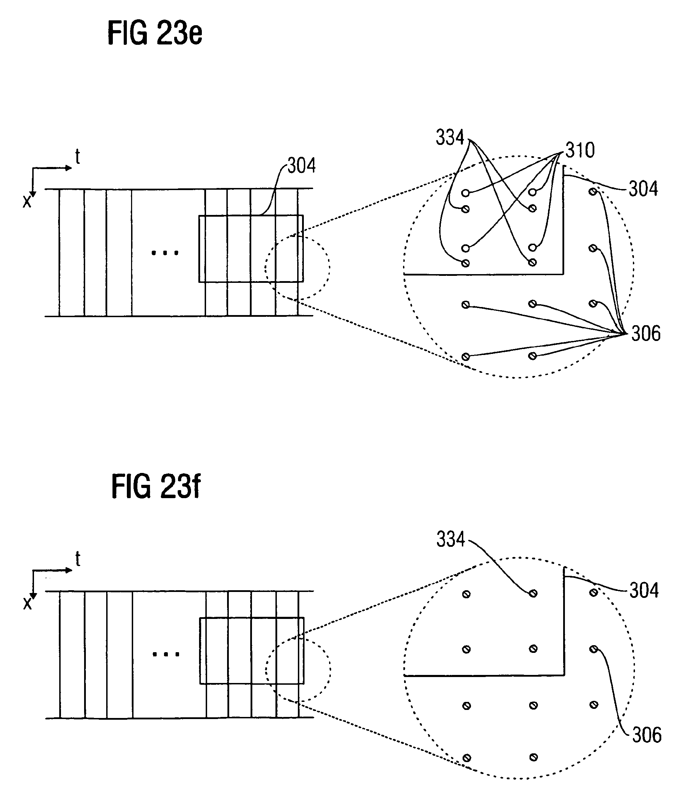

Thereafter, the motion compensation or motion alignment of step 305 is reversed in step 336. As shown in Fig. 23e, this involves warping back the translatively moved irregular grid coordinates of pixels 334 of the spatio-temporal reference patches within the spatio-temporal volume 304 to be synthesized to backwardly warped irregular grid coordinates. As illustrated in Fig. 23e, theoretically, the pixels 306 surrounding the spatio-temporal volume 304 to be synthesized would be warped back into the original regular grid positions 310. However the back-warping of these pixels actually needs not to be performed since their luma and/or chroma values at these regular grid positions is known from the original state in Fig. 23a anyway.

In order to eliminate the irregularity of the positions of the reference patch pixels 334 within the spatio-temporal volume 304 to be synthesized, in step 338, an interpolation on the pixels 334 of the spatio-temporal reference patches within the spatio-temporal volume 304 to be synthesized from the backwardly warped irregular grid coordinates onto the genuine and yet empty regular grid positions 310 of pixels of the spatio-temporal volume 304 to be synthesized is performed thereby synthesizing the spatio-temporal volume to be synthesized. The result is shown in Fig. 23f.

It is noted that a respective texture synthesizer for performing the method of Fig. 22 could be implemented as a computer program having program portions for performing the respective steps in Fig. 22. These program portions could, for example, be implemented as individual sub-routines. However, other implementations are also possible such as ICs or the like.

Moreover, as for the other embodiments described above, the texture synthesizing according to Figs. 22 to 23f does not necessarily require side information. However, it is possible that a side information from a texture analyzer comprises information regarding the motion compensation or the motion alignment. Similarly, side information could involve information on where to obtain the spatio-temporal reference patches for the individual spatio-temporal volumes to be synthesized. However, it is also possible that this just mentioned information is derived by the texture synthesizer itself by use of motion compensation or motion alignment techniques and texture references search routines. Lastly, it is again emphasized that the above embodiment of Figs. 22 to 23f could also be performed by use of another filling process other than the one described above, which involves the graph-cut algorithm in connection with an overlay between reference patches and the border area.

For a texture synthesizer according to embodiments of the present invention to be able to synthesize texture in a video sequence, side information is required by the texture synthesizer for non-rigid textures, to infer synthetic textures from the available reference textures in the reference bursts 134, 136. According to embodiments of the present invention, the side information mainly corresponds to a segmentation mask and a motion parameter set for each picture of the video sequence to be synthesized.

The segmentation mask indicates, which sample sub-set of the current frame corresponds to a region 150 to be synthesized. The segmentation mask also indicates if and where the textures identified in the SYNTH frames 132 can be found in the corresponding reference frames 134, 136. Note that according to embodiments of the present invention, a binary mask is transmitted from an encoder to the decoder or synthesizer.

The perspective global motion parameters $a_1$ to $a_8$ of each picture with respect to the reference time instants are estimated by a texture analyzer as described above. These motion parameters must be transmitted to the texture synthesizer as side information. According to embodiments of the present invention, they are uniformly quantized and the quantization step size can be varied. Additionally, a burst marker is also transmitted for each frame to indicate to which burst type (SYNTH or REF) the given frame corresponds.

According to embodiments of the present invention, additional parameters are transmitted as side information if several non-connected regions of the same texture-class are available in the same segmentation mask. These parameters are referred to as split parameters and comprise a split flag signaling that a given SYNTH frame contains at least two non-connected texture regions to be synthesized of the same class. Is the split flag set, the texture analyzer or the side information has to provide labels of the texture regions of the same class in the current mask for the texture synthesizer to identify the split regions. The split information is also used to signal the synthesizer that the order of the texture regions in the mask has changed, which yields consistent interpretation of the binary mask by the texture synthesizer. The required side information for the texture synthesizer according to embodiments of the present invention is summarized in the following table.

Tab. 1

| Side info. | Amount | Occurrence | Explanation |
|---|---|---|---|
| Mask | 1 | Picture | Segmentation mask with highlighted synthesizable texture regions |
| $a_1, ..., a_8$ | $\leq 1$ | Picture | Perspective motion parameters eq. (22) for temporal alignment |
| Split Flag | 1 | Picture | More than one region of the same class in mask ? Order of texture regions changed ? |
| Split Order | x | Picture | Labels of texture segments in segmentation mask. Transmitted only if "Split Flag" set. |
| Burst Marker | 1 | Picture | Indicator for picture's affiliation to REF or SYNTH burst |
| $QP_{synth,i} ... QP_{synth,8}$ | 1 | Sequence | Quantization parameter set for motion parameters |

One segmentation mask with highlighted synthesizable texture regions is transmitted per frame or picture. A set of perspective motion parameters according to equation (22) for temporal alignment is transmitted per frame only if motion is detected. One "Split Flag" indicating more than one region of the same class in the segmentation mask and indicating whether the order of texture regions has changed is transmitted per frame. The split order indicating the labels of texture segments in the segmentation mask is transmitted only if the "Split Flag" is set. Additionally, the burst marker is transmitted for each frame to indicate to which burst type the given frame corresponds. A quantization parameter set $QP_{synth,l}, ... , QP_{synth,8}$ for the motion parameters is transmitted e.g. per GoF. The quantization parameter set can be varied in order to account for the amount of motion in a video sequence. In the subsequent paragraphs, experimental evaluations are conducted to demonstrate that the inventive method for synthesizing texture in a video sequence entail significant perceptual gains in the constrained texture synthesis framework.

The ground truth set selected for the evaluations consists of five video sequences with different variations of the water texture. The latter texture is considered in the experiments because it is a good representative of the class of non-rigid textures. The selected video clips are extracted from the "Whale Show", the "Open Water", the "Synchronized Swimming", the "Jaws", and the "Deep Blue" sequences. These clips feature different lighting conditions (e.g. daytime, nighttime) and properties (e.g. small waves, large waves) of the water texture. Here, only examples of the "Whale Show" and the "Synchronized Swimming" sequences are shown in Fig. 2524.

Relevant properties of the ground truths are given in table 2. Notice that all the video clips having CIF resolution (352x288), are shown at 15 Hz frame rate and have a length of 6s to 13s.

Tab. 2 - Properties of ground truths for evaluation of efficiency of proposed texture synthesis algorithm for non-rigid textures

| Video sequence | Camera motion | Filling strategy | Description |
|---|---|---|---|
| "Open Water" | Yes | Helical | Talking foreground person (only upper part of the body visible) with sea in the background |
| "Whale Show" | Yes | Scanline | Orca in oversized swimming pool (foreground) and spectators in the background |
| "Synchro. Swimming" | No | Helical | Synchronized swimmers in a swimming pool |
| "Jaws" | No | Scanline | Life buoy floating on the sea |
| "Deep Blue" | No | Helical | Person swimming in the sea |

The data set is subjectively evaluated using the Double Stimulus Continuous Quality Scale (DSCQS) method. That is, test subjects are asked to compare the quality of a synthetic clip with the quality of the corresponding original video sequence. Subjective opinion scores are obtained as a result. Perceptual degradations due to texture synthesis can thus be measured.

As the filling strategy does not have a significant influence on the selected test sequences, the different approaches, i.e. helical and scanline stuffing, are applied arbitrarily. The spatio-temporal boundary condition is assumed to be sized at least 16 pixels spatially and eight pixels temporally. The patch size is set to 32x32x16 (height x width x temporal depth). Feathering is done in a 3x3x3 neighborhood. Finally, the REF burst length is set to 20 pictures, while the SYNTH burst length lies between 40 and 160 pictures, i.e. 2.7s to 10.7s, depending on the video sequence. Note, that other values are also applicable and in general subject to the video content.

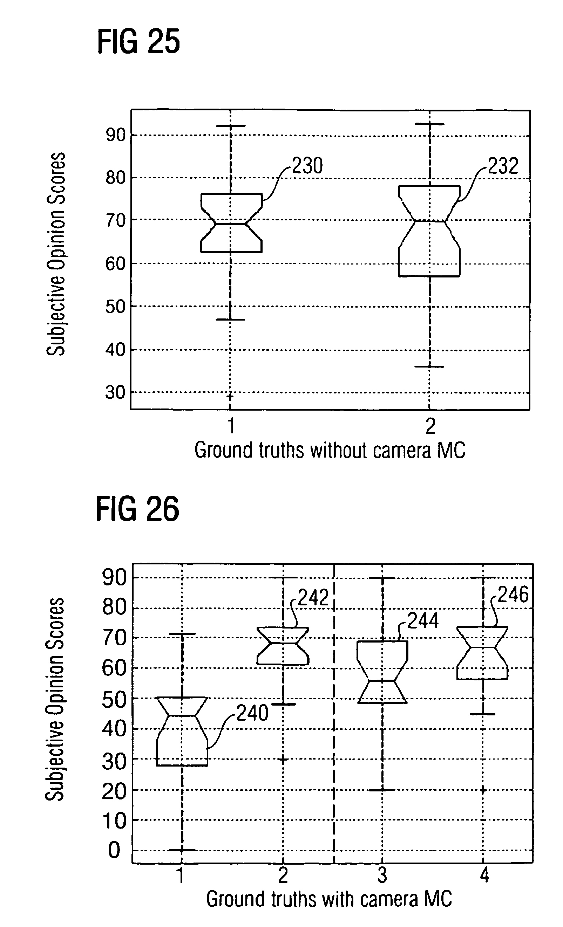

The video sequences without camera motion (compare Table 2) are evaluated in the first part of the experiments to measure the perceptibility of the distortions inserted through texture synthesis. Ten test subjects have been asked to evaluate the three given test sequences. The experimental results are given in Fig. 25.

Fig. 25 shows different boxplots of opinion scores obtained using the DSCQS method for non-rigid texture synthesis without temporal alignment. Opinion scores for synthetic sequences without temporal alignment are referred to with 230. An opinion score for reference sequences is referred to with 232.

It can be seen that no statistically relevant difference between original and synthetic video clips can be observed by the test subjects. Some test subjects have assigned some reference video clips worse opinion scores than corresponding synthetic versions (cp. lower whiskers of both boxplots 230, 232 in Fig. 25). This shows that the synthesis operation for the constrained framework according to embodiments of the present invention can be applied to natural video sequences with good synthesis results.

Similar experiments as in the previous section are conducted for the sequences with camera motion. Good results are obtained when temporal alignment of the pictures to be synthesized is conducted as can be seen in Fig. 26.

Fig. 26 shows different boxplots of opinion scores obtained using the DSCQS method for non-rigid texture synthesis with and without camera motion compensation. Opinion scores for synthetic sequences without camera motion compensation are referred to with 240. A first opinion score for reference sequences is referred to with 242. Opinion scores for synthetic sequences with camera motion compensation are referred to with 244. A second opinion score for reference sequences is referred to with 246.

No statistically relevant distinction between the opinion scores for reference clips 242, 246 and synthetic clips 244 can be made in this case. The scores, however, appear to be slightly worse for video clips with camera motion compared to clips without camera motion (cp. Fig. 25 and Fig. 26 (244, 246)). This might relate to the interpolation operations that are conducted in the course of the motion compensation process.

The quality of the synthetic clips decreases rapidly, when no temporal alignment is conducted although camera motion is present in the given video clip. This is depicted by plot 240 in Fig. 26.

Hence, the temporal alignment feature according to embodiments of the present invention is important for the perceived quality of a synthetic video sequence. It is interesting to note that the subjective quality scores assigned to the reference video clips (242, 246) fluctuate depending on the quality of the synthetic clips shown to the test subjects.

To summarize, the method for synthesizing texture in a video sequence is a non-parametric, patch-based and for that applicable to a large class of spatio-temporal textures with and without local motion activity. A video decoder, according to embodiments of the present invention reconstructs, textures like water, grass, etc. that are usually very costly to encode at a video encoder. For that, an inventive texture synthesizer in conjunction with side information, that is provided by a texture encoder, is synthesizing spatio-temporal holes in a video sequence to be synthesized. Spurious patches are thereby avoided by using graph-cuts to generate irregular contours at transitions, i.e. spatio-temporal boundary regions, between natural and synthetic textures, and preferably place them in high-frequency regions, where they are less visible.

As aforementioned, the concept for synthesizing texture can also be used for synthesizing 2D-portions, i.e. spatial portions of still images.

Depending on certain implementation requirements, the inventive methods, the inventive method can be implemented in hardware or in software. The implementation can be performed using a digital storage medium, in particular a disk, DVD, or a CD having electronically readable control signals stored thereon, which cooperate with programmable computer systems such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

**Claims**

1. Apparatus for synthesizing texture in a video sequence to be synthesized, the video sequence comprising a sequence (132) of frames, the apparatus comprising

means (305) for applying motion compensation to a part of the video sequence by warping genuine regular grid coordinates of pixels neighboring the spatio-temporal volume to be synthesized and pixels of patio-temporal reference patches formed by the video sequence to be synthesized outside the spatio-temporal volume to be synthesized to respective irregular grid coordinates;

means (312) for filling the spatio-temporal volume (150) to be synthesized by placing the spatio-temporal reference patches (162; 164) onto the spatio-temporal volume (150) to be synthesized;

means (320) for logging the placement of the spatio-temporal reference patches by emulating the placement thereof by translative movement of the irregular grid coordinates of pixels of the spatio-temporal reference patches into the spatio-temporal volume to be synthesized;

means (336) for reversing the motion compensation by warping back the translatively moved irregular grid coordinates of pixels of the spatio-temporal reference patches within the spatio-temporal volume to be synthesized to backwardly warped irregular grid coordinates; and

means (338) for performing an interpolation on the pixels of the spatio-temporal reference patches within the spatio-temporal volume to be synthesized from the backwardly warped irregular grid coordinates onto genuine regular grid coordinates of pixels of the spatio-temporal volume to be synthesized thereby synthesizing the spatio-temporal volume to be synthesized.

2. Apparatus according to claim 1, wherein the means for filling is adapted to perform an interpolation on the pixels of the spatio-temporal reference patches and the pixels neighboring the spatio-temporal volume to be synthesized from the irregular grid coordinates onto genuine regular grid coordinates and to then place the spatio-temporal reference patches (162; 164) onto the spatio-temporal volume (150) by use of the genuine regular grid coordinates.

3. Method for synthesizing texture in a video sequence to be synthesized, the video sequence comprising a sequence (132) of frames, the method comprising

applying (305) motion compensation to a part of the video sequence by warping genuine regular grid coordinates of pixels neighboring the spatio-temporal volume to be synthesized and pixels of spatio-temporal reference patches formed by the video sequence to be synthesized outside the spatio-temporal volume to be synthesized to respective irregular grid coordinates;

filling (312) the spatio-temporal volume (150) to be synthesized by placing the spatio-temporal reference patches (162; 164) onto the spatio-temporal volume (150) to be synthesized;

logging (320) the placement of the spatio-temporal reference patches by emulating the placement thereof by translative movement of the irregular grid coordinates of pixels of the spatio-temporal reference patches into the spatio-temporal volume to be synthesized;

reversing (336) the motion compensation by warping back the translatively moved irregular grid coordinates of pixels of the spatio-temporal reference patches within the spatio-temporal volume to be synthesized to backwardly warped irregular grid coordinates; and

performing (338) an interpolation on the pixels of the spatio-temporal reference patches within the spatio-temporal volume to be synthesized from the backwardly warped irregular grid coordinates onto genuine regular grid coordinates of pixels of the spatio-temporal volume to be synthesized thereby synthesizing the spatio-temporal volume to be synthesized.

4. Method according to claim 3, wherein the filling comprises performing an interpolation on the pixels of the spatio-temporal reference patches and the pixels neighboring the spatio-temporal volume to be synthesized from the irregular grid coordinates onto genuine regular grid coordinates and then placing the spatio-temporal reference patches (162; 164) onto the spatio-temporal volume (150) by use of the genuine regular grid coordinates.

5. A computer program enabling a computer, once it has been loaded into the computer's memory, to perform a method as claimed in claims 3 or 4.

**Patentansprüche**

1. Vorrichtung zum Generieren von Textur in einer zu generierenden Videosequenz, wobei die Videosequenz eine Sequenz (132) von Rahmen aufweist, wobei die Vorrichtung folgende Merkmale aufweist:

eine Einrichtung (305) zum Anlegen von Bewegungskompensation an einen Teil der Videosequenz durch Verkrümmen echter regelmäßiger Gitterkoordinaten von Pixeln benachbart zu dem zu generierenden räumlich-zeitlichen Volumen und Pixeln von räumlich-zeitlichen Referenzstellen, die durch die zu generierende Videosequenz gebildet werden, außerhalb des zu generierenden räumlich-zeitlichen Volumens, zu jeweiligen unregelmäßigen Gitterkoordinaten;

eine Einrichtung (312) zum Füllen des zu generierenden räumlich-zeitlichen Volumens (150) durch Platzieren der räumlich-zeitlichen Referenzstellen (162; 164) auf das zu generierende räumlich-zeitliche Volumen (150);

eine Einrichtung (320) zum Protokollieren der Platzierung der räumlich-zeitlichen Referenzstellen durch Emulieren der Platzierung derselben durch Translationsbewegung der unregelmäßigen Gitterkoordinaten von Pixeln der räumlich-zeitlichen Referenzstellen in das zu generierende räumlich-zeitliche Volumen;

eine Einrichtung (336) zum Umkehren der Bewegungskompensation durch Zurück-Verkrümmen der translatorisch bewegten unregelmäßigen Gitterkoordinaten von Pixeln der räumlich-zeitlichen Referenzstellen in dem zu generierenden räumlich-zeitlichen Volumen zu rück-verkrümmten unregelmäßigen Gitterkoordinaten; und

eine Einrichtung (338) zum Durchführen einer Interpolation an den Pixeln der räumlich-zeitlichen Referenzstellen in dem zu generierenden räumlich-zeitlichen Volumen, von den rück-verkrümmten unregelmäßigen Gitterkoordinaten auf echte regelmäßige Gitterkoordinaten von Pixeln des zu generierenden räumlich-zeitlichen Volumens, wodurch das zu generierende räumlich-zeitliche Volumen generiert wird.

2. Vorrichtung gemäß Anspruch 1, bei der die Einrichtung zum Füllen angepasst ist, um eine Interpolation an den Pixeln der räumlich-zeitlichen Referenzstellen und den Pixeln benachbart zu dem zu generierenden räumlich-zeitlichen Volumen von den unregelmäßigen Gitterkoordinaten auf echte regelmäßige Gitterkoordinaten durchzuführten, und dann die räumlich-zeitlichen Referenzstellen (162; 164) durch Verwenden der echten regelmäßigen Gitterkoordinaten auf das räumlich-zeitliche Volumen (150) zu platzieren.

3. Verfahren zum Generieren von Textur in einer zu generierenden Videosequenz, wobei die Videosequenz eine Sequenz (132) von Rahmen aufweist, wobei das Verfahren folgende Schritte aufweist:

Anlegen von Bewegungskompensation an einen Teil der Videosequenz durch Verkrümmen echter regelmäßiger Gitterkoordinaten von Pixeln benachbart zu dem zu generierenden räumlich-zeitlichen Volumen und Pixeln von räumlich-zeitlichen Referenzstellen, die durch die zu generierende Videosequenz gebildet werden, außerhalb des zu generierenden räumlich-zeitlichen Volumens, zu jeweiligen unregelmäßigen Gitterkoordinaten;

Füllen des zu generierenden räumlich-zeitlichen Volumens (150) durch Platzieren der räumlich-zeitlichen Referenzstellen (162; 164) auf das zu generierende räumlich-zeitliche Volumen (150);

Protokollieren der Platzierung der räumlich-zeitlichen Referenzstellen durch Emulieren der Platzierung derselben durch Translationsbewegung der unregelmäßigen Gitterkoordinaten von Pixeln der räumlich-zeitlichen Referenzstellen in das zu generierende räumlich-zeitliche Volumen;

Umkehren der Bewegungskompensation durch Zurück-Verkrümmen der translatorisch bewegten unregelmäßigen Gitterkoordinaten von Pixeln der räumlich-zeitlichen Referenzstellen in dem zu generierenden räumlich-zeitlichen Volumen zu rück-verkrümmten unregelmäßigen Gitterkoordinaten; und

Durchführen einer Interpolation an den Pixeln der räumlich-zeitlichen Referenzstellen in dem zu generierenden räumlich-zeitlichen Volumen, von den rück-verkrümmten unregelmäßigen Gitterkoordinaten auf echte regelmäßige Gitterkoordinaten von Pixeln des zu generierenden räumlich-zeitlichen Volumens, wodurch das zu generierende räumlich-zeitliche Volumen generiert wird.

4. Verfahren gemäß Anspruch 3, bei dem das Füllen das Durchführen einer Interpolation an den Pixeln der räumlich-zeitlichen Referenzstellen und den Pixeln benachbart zu dem zu generierenden räumlich-zeitlichen Volumen von den unregelmäßigen Gitterkoordinaten auf echte regelmäßige Gitterkoordinaten aufweist, und dann Platzieren der räumlich-zeitlichen Referenzstellen (162; 164) auf das räumlich-zeitliche Volumen (150) durch Verwenden der echten regelmäßigen Gitterkoordinaten.

5. Ein Computerprogramm, das es einem Computer ermöglicht, sobald es in den Speicher des Computers geladen ist, ein Verfahren gemäß Anspruch 3 oder 4 durchzuführen.

**Revendications**

1. Appareil pour synthétiser une texture dans une séquence vidéo à synthétiser, la séquence vidéo comprenant une séquence (132) de trames, l'appareil comprenant

un moyen (305) destiné à appliquer une compensation de mouvement à une partie de la séquence vidéo en alignant les coordonnées de grille régulière réelles de pixels adjacents au volume spatio-temporel à synthétiser et de pixels de carreaux de référence spatio-temporels formés par la séquence vidéo à synthétiser en-dehors du volume spatio-temporel à synthétiser sur les coordonnées de grille irrégulière respectives;

un moyen (312) destiné à remplir le volume spatio-temporel (150) à synthétiser en plaçant les carreaux de référence spatio-temporels (162; 164) sur le volume spatio-temporel (150) à synthétiser;

un moyen (320) destiné à enregistrer le placement des carreaux de référence spatio-temporels en émulant leur placement par un déplacement en translation des coordonnées de grille irrégulière des pixels des carreaux de référence spatio-temporels vers le volume spatio-temporel à synthétiser;

un moyen (336) destiné à inverser la compensation de mouvement en alignant en arrière les coordonnées de grille irrégulière déplacées en translation des pixels des carreaux de référence spatio-temporels dans le volume spatio-temporel à synthétiser à des coordonnées de grille irrégulière alignées en arrière; et

un moyen (338) destiné à effectuer une interpolation sur les pixels des carreaux de référence spatio-temporels dans le volume spatio-temporel à synthétiser à partir des coordonnées de grille irrégulière alignées en arrière sur les coordonnées de grille régulière réelles des pixels du volume spatio-temporel à synthétiser, synthétisant ainsi le volume spatio-temporel à synthétiser.

2.  Appareil selon la revendication 1, dans lequel le moyen destiné à remplir est adapté pour effectuer une interpolation sur les pixels des carreaux de référence spatio-temporels et les pixels adjacents au volume spatio-temporel à synthétiser à partir des coordonnées de grille irrégulière sur les coordonnées de grille régulière réelles et à placer ensuite les carreaux de référence spatio-temporels (162; 164) sur le volume spatio-temporel (150) à l'aide des coordonnées de grille régulière réelles.

3.  Procédé pour synthétiser une texture dans une séquence vidéo à synthétiser, la séquence vidéo comprenant une séquence (132) de trames, le procédé comprenant

appliquer (305) une compensation de mouvement à une partie de la séquence vidéo en alignant les coordonnées de grille régulière réelles de pixels adjacents au volume spatio-temporel à synthétiser et de pixels de carreaux de référence spatio-temporels formés par la séquence vidéo à synthétiser en-dehors du volume spatio-temporel à synthétiser sur les coordonnées de grille irrégulière respectives;

remplir (312) le volume spatio-temporel (150) à synthétiser en plaçant les carreaux de référence spatio-temporels (162; 164) sur le volume spatio-temporel (150) à synthétiser;

enregistrer (320) le placement des carreaux de référence spatio-temporels en émulant leur placement par un déplacement en translation des coordonnées de grille irrégulière des pixels des carreaux de référence spatio-temporels vers le volume spatio-temporel à synthétiser;

inverser (336) la compensation de mouvement en alignant en arrière les coordonnées de grille irrégulière déplacées en translation des pixels des carreaux de référence spatio-temporels dans le volume spatio-temporel à synthétiser à des coordonnées de grille irrégulière alignées en arrière; et

effectuer (338) une interpolation sur les pixels des carreaux de référence spatio-temporels dans le volume spatio-temporel à synthétiser à partir des coordonnées de grille irrégulière alignées en arrière sur les coordonnées de grille régulière réelles des pixels du volume spatio-temporel à synthétiser, synthétisant ainsi le volume spatio-temporel à synthétiser.

4.  Procédé selon la revendication 3, dans lequel le remplissage comprend le fait d'effectuer une interpolation sur les pixels des carreaux de référence spatio-temporels et les pixels adjacents au volume spatio-temporel à synthétiser à partir des coordonnées de grille irrégulière sur les coordonnées de grille régulière réelles et placer ensuite les carreaux de référence spatio-temporels (162; 164) sur le volume spatio-temporel (150) à l'aide des coordonnées de grille régulière réelles.

5.  Programme d'ordinateur permettant, lorsqu'il a été chargé dans la mémoire de l'ordinateur, qu'un ordinateur réalise un procédé selon les revendications 3 ou 4.

FIG 1

FIG 2

# FIG 3

Texture sample

36
28

Patch#B    Patch#A

33

34

Keep as it

Overlap    38

Synth. texture

# FIG 4

M(2, 3, A, B)

40

A

B

## FIG 5

## FIG 6

## FIG 7

72    74    78    80    84

Key frames        synth. frames

## FIG 8

Input Sequence          Similar frames

t

Output Sequence

Overlap

Min-cut

# FIG 9

deviding incoming video sequence
into overlapping Groups of Frames ⟋S1

↓

performing global motion
compensation on each GoF ⟋S2

↓

perform patch-based algorithm on
portions of frames to be synthesized ⟋S3

↓

optional: Post-Processing (Feathering
Multiresolutin-Spline, etc.) ⟋S4

↓

inverse global motion
compensation on GoF ⟋S5

↓

synth. GoF

## FIG 10

100

Texture Synthesis 106

108 — Patch Matching

114 — Post-proc. (Feathering)

118 120

Video In 102

GMC 104

110 — Patch Placement

112 — Graph Cut

116 — Post-proc. (Mutires. spline)

Inv GMC 118

Video Out 120

## FIG 11

134 — Ref burst

132 — Synth burst

136 — Ref burst

142 — Synth burst

144

130

140

## FIG 12

162  164

Patch #1  Patch #2

Texture sample  160

158

150

154

152

Output texture

## FIG 13

$t$

# FIG 14

FREE
INVALID
LOCK
USED

# FIG 15

EMPTY
ORIG
SYNTH
CONST

# FIG 16

# FIG 17

## FIG 18

## FIG 19

## FIG 20

Reference picture (t = $t_0$)

## FIG 21

$a_{30}$

$a_{20}$

$a_{10}$   $a_{21}$   $a_{32}$

212

210

$t_{-3}$   $t_{-2}$   $t_{-1}$   $t_0$   $t_1$   $t_2$   $t_3$   t

## FIG 22

| motion compensation | 305 |

| filling the spatial-temporal volume | 312 |

| logging the placement of the spatial-temporal reference patches | 320 |

| reversing motion comensation in irregular grid domain | 336 |

| interpolation | 338 |

FIG 23a

FIG 23b

FIG 23c

## FIG 23d

## FIG 23e

## FIG 23f

FIG 24

## FIG 25

Ground truths without camera MC

## FIG 26

Ground truths with camera MC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. A. Efros ; W. T. Freeman.** Image Quilting for Texture Synthesis and Transfer. *Computer Graphics Proc. (SIGGRAPH 01),* August 2001, 341-346
- **V. Kwatra ; A. Schödl ; I. Essa ; G. Turk ; A. Bobick.** Graphcut Textures: Image and Video Synthesis using Graph Cuts. *Computer Graphics Proc. (SIGGRAPH 03),* July 2003, 277-286
- **R.K. Ahuja ; T.L. Magnanti ; J.B. Orlin.** Network Flows: Theory, Algorithms, and Applications. Prentice Hall, 1993
- **Boykov, Y. ; Veksler, O. ; Zabih, R.** Fast approximate energy minimization via graph cuts. *IEEE Trans. Pattern Anal. and Machine Intell.,* 2001, vol. 23, 1222-1239
- **Sinha, S.** Graph Cut Algorithms in Vision, Graphics and Machine Learning - An Integrative Paper. *UNC Chapel Hill,* November 2004

- **L.R. Ford, Jr. ; D.R. Fulkerson.** Flows in Networks. Princeton University Press, 1962
- Graph Based Algorithms for Scene Reconstruction from Two or More Views. **Kolmogorov, V.** PhD Thesis. Cornell University, 2004
- **Sinha, S.** Graph Cut Algorithms in Vision, Graphics and Machine Learning - An Integrative Paper. UNC Chapel Hill, November 2004
- Theoretical Analysis of Graphcut Textures. **Qin, X. ; Yang, Y.H.** Technical Report 05-26. Department of Computer Science, 2005
- **Burt, P.J. ; Adelson, E.H.** A Multiresolution Spline With Application to Image Mosaics. *ACM Transactions on Graphics,* October 1983, vol. 2 (4), 217-236
- Globale Bewegungsbeschreibung und Video Mosaiking unter Verwendung parametrischer 2-D Modelle, Schätzverfahren und Anwendungen. **Smolic, A.** PhD Thesis. Aachen University of Technology, May 2001